# EUROPEAN PATENT APPLICATION

(11) **EP 4 700 950 A1**
(43) Date of publication of application: **25.02.2026**
(21) Application number: 24908221.5
(22) Date of filing: 23.12.2024
(51) Int. Cl.: H01M 50/342, H01M 50/107, H01M 10/04, H01M 50/383, H01M 50/538, H01M 50/533, H01M 50/531, H01M 50/249

(54) **LITHIUM SECONDARY BATTERY**

(30) Priority: 22.12.2023 KR 20230189919; 22.11.2024 KR 20240169074
(71) Applicant: LG Energy Solution, Ltd., Seoul 07335 (KR)
(72) Inventor: HAN, Woo Ri, Daejeon 34122 (KR); LEE, Kwan Soo, Daejeon 34122 (KR); KO, Kwang Hun, Daejeon 34122 (KR); KIM, Do Gyun, Daejeon 34122 (KR); KIM, Jungjin, Daejeon 34122 (KR); KIM, Hongjae, Daejeon 34122 (KR); PARK, Mingu, Daejeon 34122 (KR); PARK, Sangjin, Daejeon 34122 (KR); PARK, Jong Hoon, Daejeon 34122 (KR); BACK, Heeji, Daejeon 34122 (KR); SON, Uirim, Daejeon 34122 (KR); SHIN, Hangsoo, Daejeon 34122 (KR); WOO, Jae Young, Daejeon 34122 (KR); LEE, Myung An, Daejeon 34122 (KR); LEE, Junsu, Daejeon 34122 (KR); CHAE, Sanghak, Daejeon 34122 (KR); CHOI, Wonyoung, Daejeon 34122 (KR); HANGBO, Kwang Su, Daejeon 34122 (KR)
(74) Representative: Goddar, Heinz J.
(86) International application number: PCT/KR2024/020976
(87) International publication number: WO 2025/135939

(57) **Abstract**

This lithium secondary battery may comprise a battery can, an electrode assembly and an electrolyte contained in the battery can, and a cap plate configured to seal the battery can. The battery can may include a first end and a second end opposite to the first end. The lithium secondary battery is configured such that, if the internal pressure of the battery can is 21 kgf/cm² or higher, at least a part of the battery assembly is discharged through the first end of the battery can. After a part of the battery assembly is discharged through the first end of the battery can, the distance from an end of the electrode assembly located farthest from the battery can to the second end of the battery can is at least 1.25 times the distance between the first end and the second end of the batterv can.

## Description

### [Technical Field]

### [Cross-Reference to Related Applications]

This application claims priority to Korean Patent Application No. 10-2023-0189919, filed on December 22, 2023, and Korean Patent Application No. 10-2024-0169074, filed on November 22, 2024, the disclosures of each of which are incorporated by reference herein in their entirety.

The present disclosure relates to a lithium secondary battery. More particularly, the present disclosure relates to a lithium secondary battery having a structure in which an electrode assembly is received in a battery can.

### [Background]

Recently, with the development of electric vehicle technology, the demand for high capacity batteries is increasing, and there is a need for development of large cylindrical batteries having high volume. Such batteries are drawing attention as an energy source for enhancing environmental friendliness and energy efficiency in that the use of fossil fuels can be reduced greatly and that no byproduct is generated during energy consumption.

In the case of commonly used small cylindrical batteries, i.e., cylindrical batteries having 1865 or 2170 form factor, resistance or heat generation does not have a great influence on battery performance due to low capacity. However, when the specifications of small cylindrical batteries are applied to large cylindrical batteries, serious problems with battery safety may occur.

As the size of a battery increases, the amount of heat and gas generated in the battery increases as well. Due to the heat and gas, temperature and pressure in the battery increases, causing fire or explosion in the battery. To prevent this, it is necessary to properly release the heat and gas inside the batteries to the atmosphere. To this end, the cross-sectional area of the battery, as a passage for releasing the heat out of the battery, needs to be increased with increasing volume. However, because the increase in cross-sectional area is generally less than the increase in volume as the batteries increases in size, the amount of heat generated in the batteries increases and the consequential explosion risk increases, while the output decreases. Additionally, during fast charging at high voltage, a large amount of heat may be generated near electrode tabs in a short time, which may cause fire in the batteries.

To prevent fire or explosion risks, according to the conventional art, secondary batteries are equipped with safety devices. As an example, cylindrical secondary batteries may generally have vent portions. According to the conventional art, when the internal pressure of a secondary battery rises, the vent portions move up and their parts are ruptured to form paths for the release of gas, and gas inside the secondary battery is released to the atmosphere, thereby preventing explosion risks.

However, even when the vent portions are open, the side rupture of the battery can may occur. When it is used in a vehicle, the cylindrical lithium secondary battery is applied to the vehicle in the form of a battery pack in which a plurality of cylindrical lithium secondary batteries are coupled to each other. The side rupture of a battery can lead to continuous flame spread to adjacent other unit cells within the battery pack.

### [Technical Problem]

The present disclosure is directed to a battery having high volume for high capacity and high safety by reducing or preventing side rupture of a battery can when the internal pressure of the battery can rises in the lithium secondary battery.

Additionally, by reducing or preventing the side rupture of the battery can, aspects of the present disclosure may reduce the influence of any one battery on adjacent other batteries in a battery pack including a plurality of batteries. This may greatly improve the safety of the battery pack and a vehicle including the batteries.

Accordingly, the present disclosure relates to a lithium secondary battery, a battery pack, and a vehicle with improved safety.

### [Technical Solution]

An aspect of the present disclosure provides a lithium secondary battery including a battery can, an electrode assembly and an electrolyte received in the battery can, and a cap plate configured to seal the battery can, wherein the battery can comprises a first end portion and a second end portion opposite the first end portion, wherein the lithium secondary battery is configured such that at least a portion of the electrode assembly is ejected through the first end portion of the battery can when an internal pressure within the battery can is 21 kgf/cm² or more, and wherein after the portion of the electrode assembly is ejected through the first end portion of the battery can, a distance from an end portion of the electrode assembly located farthest away from the battery can to the second end portion of the battery can is greater than or equal to 1.25 times a distance between the first end portion and the second end portion of the battery can.

According to an aspect, the lithium secondary battery is configured such that the portion of the electrode assembly is ejected through the first end portion of the battery can without or before thermal runaway of the lithium secondary battery or without or before side rupture of the battery can.

According to an aspect, the first end portion of the battery can includes a vent portion, or the cap plate is secured to the first end portion of the battery can, and the cap plate includes a vent portion. Here, the lithium secondary battery is configured such that the portion of the electrode assembly may be ejected through the first end portion of the battery can after destruction of a structure for securing the cap plate to the first end portion of the battery can or after rupture of the vent portion.

According to an aspect, the cap plate includes a vent portion, and the vent portion is configured to rupture when the internal pressure is 21 kgf/cm² or more. According to an aspect, the vent portion may be configured to rupture when the internal pressure is more than 25 kgf/cm² and less than 29 kgf/cm².

According to an aspect, a ratio of a maximum width in a cross section of the electrode assembly in a direction perpendicular to a winding axis to a maximum width in a cross section of the battery can in the direction perpendicular to the winding axis is less than 1.

According to an aspect, the lithium secondary battery includes a first current collector plate between the first end portion of the battery can and the electrode assembly.

According to an aspect, the first current collector plate may have a battery can coupling portion having a tapered structure.

According to an aspect, a flame release area may range from 30% to 50% based on a total open area of the first end portion of the battery can.

According to an aspect, a ratio of form factor (a diameter-to-height ratio) of the lithium secondary battery may be 0.4 or more. For example, the lithium secondary battery may be a 46110 cell, a 4875 cell, a 48110 cell, a 4880 cell, a 4680 cell, or a 4695 cell.

According to an aspect, the electrode assembly is cylindrical in shape.

According to an aspect, a thickness of a side of the battery can ranges from 0.1 mm to 0.4 mm.

According to an aspect, the electrode assembly is a jellyroll-type electrode assembly including a positive electrode plate and a negative electrode plate wound with a separator interposed between the positive electrode plate and the negative electrode plate, and wherein after the portion of the electrode assembly is ejected through the first end portion of the battery can, the electrode assembly has a spiral structure.

According to an aspect, a sealing tape including polypropylene or polyimide is attached to an outermost end portion of the electrode assembly.

According to an aspect, the positive electrode plate and the negative electrode plate each includes an uncoated portion where an active material layer is not formed, and at least part of the uncoated portion of the positive electrode plate or the negative electrode plate defines an electrode tab.

According to an aspect, the positive electrode plate uncoated portion and the negative electrode plate uncoated portion are respectively formed at an end portion of the positive electrode plate and the negative electrode plate along a direction in which the electrode assembly is wound, a first current collector plate is coupled to the positive electrode plate uncoated portion and a second current collector plate is coupled to the negative electrode plate uncoated portion, and the first current collector plate and the second current collector plate are each connected to an electrode terminal.

According to an aspect, each of the positive electrode plate uncoated portion and the negative electrode plate uncoated portion is shaped into a plurality of independently bendable segments, and at least part of the plurality of independently bendable segments are bent toward a winding center of the electrode assembly.

According to an aspect, the at least part of the plurality of independently bendable segments are overlapped on a top of the electrode assembly or a bottom of the electrode assembly, and the first current collector plate and the second current collector plate are each coupled to the plurality of overlapped segments.

An aspect of the present disclosure provides a lithium secondary battery comprising a battery can, an electrode assembly and an electrolyte received in the battery can, and a cap plate configured to seal the battery can, wherein the battery can comprises a first end portion and a second end portion opposite the first end portion, wherein the lithium secondary battery comprises a first current collector plate between the first end portion of the battery can and the electrode assembly, and wherein the first current collector plate comprises a battery can coupling portion having a tapered structure.

According to an aspect, the tapered structure has a ratio of a minimum width closer to the center of the battery can (w4) to a maximum width in a direction perpendicular to the diameter passing through the center axis of the battery can (w3) of 0.7 or less.

An aspect of the present disclosure provides a lithium secondary battery comprising a battery can, an electrode assembly and an electrolyte received in the battery can, and a cap plate configured to seal the battery can, wherein the battery can comprises a first end portion and a second end portion opposite the first end portion, wherein the lithium secondary battery comprises a first current collector plate between the first end portion of the battery can and the electrode assembly, and wherein the flame release area is from 30% to 50% based on the total open area of the first end portion of the battery can.

According to an aspect, the flame release area is from 35% to 50% based on the total open area of the first end portion of the battery can.

An aspect of the present disclosure provides a lithium secondary battery comprising a battery can, an electrode assembly and an electrolyte received in the battery can, and a cap plate configured to seal the battery can, wherein the battery can comprises a first end portion and a second end portion opposite the first end portion, wherein the lithium secondary battery comprises a first current collector plate between the first end portion of the battery can and the electrode assembly, and wherein the thickness of the first current collector plate is 0.25 mm or less.

An aspect of the present disclosure provides a lithium secondary battery comprising a battery can, an electrode assembly and an electrolyte received in the battery can, and a cap plate configured to seal the battery can, and wherein a sealing tape including polypropylene or polyimide is attached to the outermost end portion of the electrode assembly.

An aspect of the present disclosure provides a lithium secondary battery comprising a battery can, an electrode assembly and an electrolyte received in the battery can, and a cap plate configured to seal the battery can, and wherein a ratio of a maximum width of the electrode assembly (w2) to a maximum width of the battery can (w1) is less than 1.

According to an aspect, a ratio of a maximum width of the electrode assembly (w2) to a maximum width of the battery can (w1) is 0.97 or less.An aspect of the present disclosure provides a battery pack including the lithium secondary battery according to the above-described aspects.

An aspect of the present disclosure provides an electric vehicle including the battery pack as a power source.

### [Advantageous Effects]

The lithium secondary battery according to aspects of the present disclosure may prevent rupture of the side portion of the battery can or local occurrence of flames at weak or vulnerable elements in the battery can before the rupture of the battery can due to the internal pressure rise within the battery can. Specifically, it may be possible to prevent rupture of the side portion of the battery can by configuring the electrode assembly to be ejected through one end portion of the battery can without or before the rupture of the side portion of the battery can due to increased pressure within the battery can. Accordingly, it may be possible to reduce the influence of any one battery on adjacent batteries in a battery pack including a plurality of batteries. This may prevent the spread of fire through the batteries. Additionally, it may be possible to prevent local occurrence of flames at weak or vulnerable elements in the battery can by configuring the electrode assembly to be ejected out of the battery can without or before the occurrence of flames in the battery can.

Accordingly, it may be possible to provide a lithium secondary battery with improved safety and a battery pack and a vehicle including the same. Additionally, due to such improved safety of the battery, other safety measures may be relaxed. For example, cost savings and improved process efficiency can be expected by reducing the thickness of the battery can that has been conventionally designed with a large thickness to improve safety.

### [Description of Drawings]

The accompanying drawings illustrate aspects of the present disclosure and together with the following detailed description, serve to provide a better understanding of the technical aspects of the present disclosure. Thus, the present disclosure should not be construed as being limited to the drawings.
FIG. 1a shows a vertical cross-section structure of a lithium secondary battery according to an aspect of the present disclosure.
FIG. 1b shows a vertical cross section structure of a lithium secondary battery according to an aspect of the present disclosure.
FIG. 2 shows a structure after an electrode assembly was ejected through a first end portion of a battery can according to an aspect of the present disclosure.
FIG. 3 is a diagram showing the electrode assembly before winding according to an aspect of the present disclosure.
FIG. 4 is a diagram showing the electrode assembly after winding according to an aspect of the present disclosure.
FIG. 5 shows a cross section of the electrode assembly in a direction perpendicular to a winding axis according to an aspect of the present disclosure.
FIG. 6 shows a sealing tape attached to the outer surface of the electrode assembly according to an aspect of the present disclosure.
FIG. 7 shows a tapered structure of a battery can coupling portion of a first current collector plate according to an aspect of the present disclosure.
FIG. 8 shows the structure of the first current collector plate according to an aspect of the present disclosure.
FIG. 9 shows the structure of the first current collector plate according to an aspect of the present disclosure.
FIG. 10 shows the structure of the first current collector plate according to an aspect of the present disclosure.
FIG. 11 is a diagram showing a flame release area at the first end portion of the battery can.
FIG. 12 is a diagram showing a cross-section of an electrode plate (a positive or negative electrode plate) according to an aspect of the present disclosure.
FIG. 13 is a schematic diagram of a battery pack including batteries according to an aspect of the present disclosure.
FIG. 14 is a schematic diagram of a vehicle including a battery pack according to an aspect of the present disclosure.
FIG. 15 shows the structure of a current collector plate used in Experimental Examples.
FIG. 16 shows the structure of a current collector plate used in Experimental Examples.
FIG. 17 is a photographic image showing the electrode ejected from the central portion of the electrode assembly according to an Experimental Example.

### [Detailed Description]

Hereinafter, aspects of the present disclosure will be described in detail with reference to the accompanying drawings. Prior to the description, it should be understood that the terms or words used in the disclosure and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation. Therefore, the aspects described herein and the illustrations shown in the drawings are exemplary aspects of the present disclosure to describe the technical aspects of the present disclosure and are not intended to be limiting. It should be understood that a variety of other equivalents and modifications could have been made thereto at the time the application was filed.

Additionally, to help the understanding of the present disclosure, the accompanying drawings may illustrate some elements in exaggerated dimensions, not in actual scale. Furthermore, the same element in different drawings may be given the same reference numeral.

Although the terms "first", "second" and the like, are used to describe various elements, these elements are not limited by the terms. These terms are used to distinguish one element from another, and unless expressly stated otherwise, a first element may be a second element.

Throughout the disclosure, each element may be singular or plural unless expressly stated otherwise.

When an element is referred to as being present "on (or below)" another element, it can be placed in contact with a surface, such as an upper surface or a lower surface, of the other element, or intervening elements may be present.

Additionally, when an element is "connected to", "coupled to," or "linked to" another element, it should be understood that they can be directly connected or linked to each other, but intervening elements may be present, or each element may be "connected to", "coupled to," or "linked to" each other through another element.

In the specification, "A and/or B" refers to either A or B or both unless expressly stated otherwise. Additionally, "C to D" refers to C or more and D or less unless expressly stated otherwise.

For convenience of description, in the disclosure, a direction following a length direction of a winding axis of an electrode assembly wound in a jellyroll style is referred to as an axial direction Y. Additionally, a direction around the winding axis is referred to as a peripheral direction or a circumferential direction X. Additionally, a direction facing toward the winding axis or facing away from the winding axis is referred to as a radial direction. Among them, in particular, the direction facing toward the winding axis is referred to as a centripetal direction, and the direction facing away from the winding axis is referred to as a centrifugal direction.

As used herein, the singular form of a word includes the plural, unless the context clearly dictates otherwise. The plural encompasses the singular and vice versa. Thus, the references "a," "an" and "the" are generally inclusive of the plurals of the respective terms. For example, while the present disclosure has been described in terms of "a" layer, "a" substrate, "a" cell, and the like, more than one of these and other components, including combinations, can be used.

The term "about" indicates and encompasses an indicated value and a range above and below that value.

The words "comprise," "comprises," and "comprising" are to be interpreted inclusively rather than exclusively. Likewise, the terms "include," "including" and "or" should all be construed to be inclusive, unless such a construction is clearly prohibited from the context. A disclosure of an embodiment defined using the term "comprising" is also a disclosure of embodiments "consisting essentially of" and "consisting of" the disclosed components. The phrase "consisting of" excludes any element, step, or ingredient not specified.

As used herein, the term "combination thereof" included in any Markush-type expression means a combination or mixture of one or more elements selected from the group of elements disclosed in the Markush-type expression, and refers to the presence of one or more elements selected from the group. The term "combinations thereof' includes every possible combination of elements to which the term refers.

As used herein, the expression "between" is inclusive of end points.

Furthermore, all numerical ranges herein should be understood to include all integers, whole or fractions, within the range. Moreover, any numerical range recited herein is intended to include all sub-ranges subsumed therein, and these numerical ranges should be construed as providing support for a claim directed to any number or subset of numbers in that range. For example, a disclosure of from 1 to 10 should be construed as supporting a range of from 1 to 8, from 3 to 7, from 1 to 9, from 3.6 to 4.6, from 3.5 to 9.9, and so forth. When ranges are given, any endpoints of those ranges and/or numbers within those ranges can be combined with the scope of the present disclosure.

As used herein, "including," "such as," "for example," and like terms mean "including/such as/for example but not limited to."

As used herein, the term "example," particularly when followed by a listing of terms, is merely illustrative, and should not be deemed to be exclusive or comprehensive. Any embodiment disclosed herein can be combined with any other embodiment disclosed herein unless explicitly indicated otherwise.

As used herein, the terms "vent portion" and "rupture notch" are interchangeable. The word "vent" in the term "vent portion" has the same meaning as the word "rupture" in the term "rupture notch."

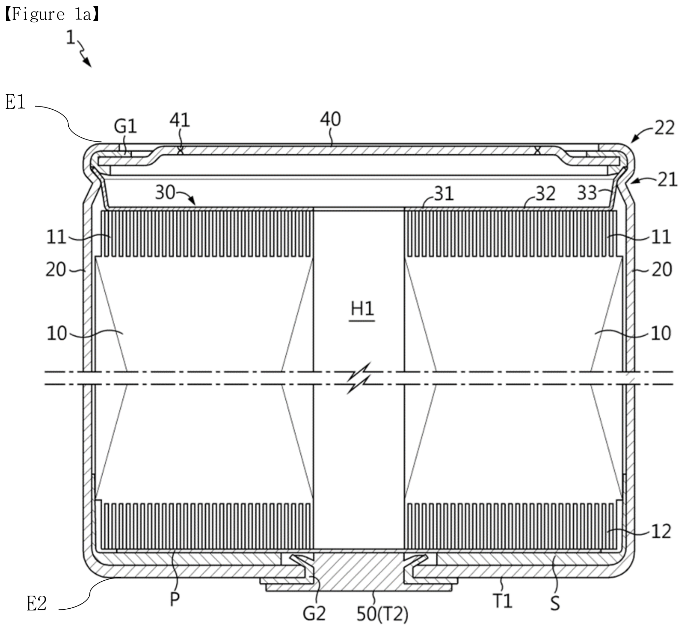

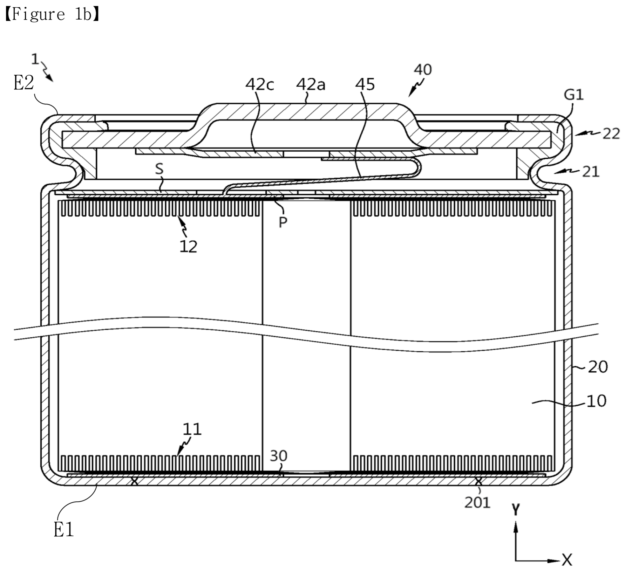

FIGS. 1a and 1b each show a vertical cross section structure of a lithium secondary battery 1 according to aspects of the present disclosure.

The lithium secondary battery 1 of FIGS. 1a or 1b includes a battery can 20, an electrode assembly 10, an electrolyte (not shown) and a cap plate 40. The battery can 20 has a first end portion E1 and a second end portion E2 opposite the first end portion E1. In the present disclosure, the two opposite end portions of the battery can 20 are referred to as the first end portion E1 and the second end portion E2, and a part connecting the first end portion E1 to the second end portion E2 and surrounding the electrode assembly is referred to as a side portion of the battery can 20. When the electrode assembly 10 is a jellyroll type, the two ends of the battery can 20 in the axial direction Y of the winding axis are the first end portion E1 and the second end portion E2, and the part of the battery can surrounding the electrode assembly in the circumferential direction X of the winding axis is referred to as the side portion of the battery can.

At least one of the first end portion E1 or the second end portion E2 includes at least one opening portion. Any one of the first end portion E1 and the second end portion E2 may include the opening portion. According to some aspects of the present disclosure, both the first end portion E1 and the second end portion E2 may include the opening portion. The electrode assembly 10 and the electrolyte may be received in the battery can 20 through the opening portion included in at least one of the first end portion E1 or the second end portion E2. After the electrode assembly 10 and the electrolyte are received in the battery can 20, the opening portion of at least one of the first end portion E1 or the second end portion E2 may be closed by the cap plate 40. FIG. 1a shows that the opening portion and the cap plate 40 are present at the first end portion E1 of the battery can 20. FIG. 1b shows that the opening portion and the cap plate 40 are present at the second end portion E2 of the battery can 20.

FIGS. 1a and 1b show the cylindrical battery 1, but the present disclosure is not limited by the shape of the battery, and may be applied to batteries of any other shapes, for example, prismatic batteries.

Referring to FIG. la, the battery 1 may further include one or more of a terminal 50, a sealing gasket G1, an insulation gasket G2, a current collector plate 30, p, or an insulator S. Referring to FIG. 1b, the battery 1 may further include one or more of a current collector plate 30, P, an insulator S, or a lead 45.

According to need, the battery can 20 may have a beading portion 21 and a crimping portion 22 at the upper end, as a structure for securing the cap plate 40 to the first end portion E1 or the second end portion E2 of the battery can 20. The beading portion 21 may be formed by beading the circumference of the outer peripheral surface of the battery can 20 toward a winding center axis. The beading portion 21 may prevent the electrode assembly 10 accommodated in the battery can 20 from slipping out through the opening portion of the battery can 20 during storage or normal charging/discharging of the lithium secondary battery, and act as a support on which the cap plate 40 is mounted.

The crimping portion 22 may be formed on the beading portion 21, and is extended and bent to surround the outer peripheral surface of the cap plate 40 disposed on the beading portion 21 and a part of the upper surface of the cap plate 40.

The cap plate 40 is used to seal the open end portion of the battery can 20, for example, the first end portion E1 or the second end portion E2. The cap plate 40 may include a sealing gasket G1 that provides sealability between the cap plate 40 and the battery can 20. The sealing gasket G1 may have an insulating property. Referring to FIG. 1b, the cap plate 40 may further include a connection plate 42c electrically and mechanically coupled to the cap plate 40. For example, the cap plate 40 may be compressed onto the beading portion 21 of the battery can 20, and secured by the crimping portion 22. The sealing gasket G1 may be interposed between the cap plate 40 and the crimping portion 22 to ensure sealability of the battery can 20 and electrical insulation between the battery can 20 and the cap plate 40.

The cap plate 40 may include any material and structure for covering the opening portion of the first end portion E1 or the second end portion E2 of the battery can 20 without limitation.

When the cap plate 40 is made of metal having electrical conductivity, the cap plate 40 may be electrically connected to a positive or negative electrode plate of the electrode assembly 10. In such aspects, the cap plate 40 may be electrically isolated from the battery can 20 through the sealing gasket G1. In this case, the cap plate 40 may act as a positive or negative terminal of the lithium secondary battery. Referring again to FIG. 1b, the cap plate 40 may have a protruding portion 42a protruded upward from the winding center C. When the protruding portion contacts an external power source, an electric current from the external power source may be applied. The protruding portion may be exposed to the outside of the lithium secondary battery for the contact with the external power source, and the degree of protrusion may be designed according to need. For example, as shown in FIG. 1a, the protruding portion may be protruded to a location corresponding to the end portion (the first end portion E1) of the battery can, or as shown in FIG. 1b, may be protruded further outwards than the end portion (the second end portion E2) of the battery can.

However, the cap plate 40 does not necessarily act as a passage of electric current. In other words, the cap plate 40 may be made of an electrically non-conductive material. Accordingly, the application of the above-described sealing gasket G1 is not necessary in the case where the battery can 20 and the cap plate 40 can be firmly secured and sealability of the open portion of the battery can 20 can be ensured through welding or by the application of another component.

Meanwhile, the battery 1 according to the present disclosure may further include the current collector plate 30, P, according to need. Specifically, the battery 1 may include a first current collector plate 30 between the first end portion E1 of the battery can 20 and the electrode assembly 10 and/or a second current collector plate P between the second end portion E2 of the battery can 20 and the electrode assembly 10. As shown in FIG. 1a, the current collector plate (the first current collector plate 30) may directly electrically contact the battery can 20, and as shown in FIG. 1b, the current collector plate (the second current collector plate P) may be connected to the lead 45. The lead 45 may be extended upward from the electrode assembly 10 and coupled to the connection plate 42c or directly coupled to the lower surface of the cap plate 40. The coupling of the lead 45 and other component may be done through welding. Preferably, the current collector plate (the second current collector plate P) may be integrally formed with the lead 45. In this case, the lead 45 may have a long plate shape extended outward from the central portion of the current collector plate (the second current collector plate P).

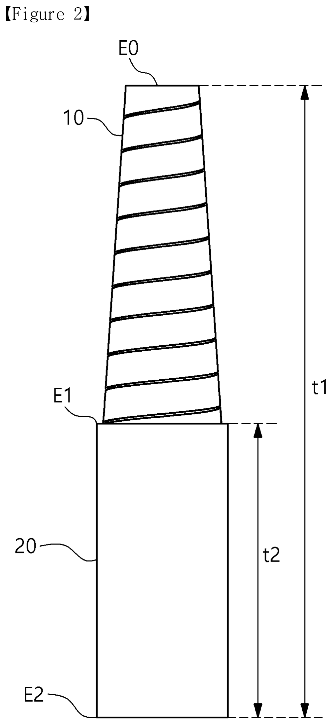

FIG. 2 shows the structure of the electrode assembly 10 after the electrode assembly 10 is ejected through the first end portion E1 of the battery can 20 by an increase in internal pressure within the battery can 20. A distance t1 is a distance from the end portion E0 of the electrode assembly 10 located farthest away from the battery can 20 to the second end portion E2 of the battery can 20. A distance t2 is a distance between the first end portion E1 and the second end portion E2 of the battery can 20. The distance t1 is 1.25 times or more, 1.27 times or more, 1.275 times or more, 1.3 times or more, 1.35 times or more, 1.4 times or more, 1.45 times or more, 1.5 times or more, 1.55 times or more, 1.6 times or more, 1.65 times or more, or 1.7 times or more than the distance t2. The distance t1 may be 3 times or less, 2.9 times or less, 2.8 times or less, 2.7 times or less, 2.6 times or less, or 2.5 times or less than the distance t2. For example, the distance t1 may be from 1.25 to 3 times the distance t2, or any other range formed from a combination of the endpoints listed above.

The increase in internal pressure of the battery can may occur due to one or more of overcharge, defects in at least one of the elements of the battery, abnormal chemical reaction, abnormal physical deformation, internal or external impacts of the battery, abnormal temperature increase, and so on. These factors are not always the cause of the increase in internal pressure of the battery can, but may increase the likelihood.

The range of ratios of the distance t1 to the distance t2 represents that the electrode assembly 10 was ejected with a strong force through the first end portion of the battery can 20. Accordingly, when the electrode assembly 10 is ejected, only the first end portion E1 of the battery can 20 or the cap plate 40 coupled to the first end portion E1 gets damaged, and any part other than the first end portion E1 or the cap plate 40 coupled to the first end portion E1, for example the side portion of the battery can, is less likely to get damaged. Accordingly, it may be possible to reduce or prevent the risk of fire spreading through batteries in a battery pack including batteries according to the present disclosure.

By the above-described mechanism of action, in the lithium secondary battery according to an aspect of the present disclosure, the electrode assembly may be ejected through the first end portion of the battery can without or before thermal runaway of the battery can, or without or before side rupture of the battery can.

As described herein, the thermal runaway of the battery can refers to a phenomenon in which fire occurs due to internal and/or external thermal factors of the battery, or temperature rise by chemical or physical impacts. The side rupture of the battery can refers to the release of the pressure in the battery can through the side of the battery can due to tearing or melting or the formation of pin holes in the battery can at a part of the battery can other than the first end portion and the second end portion of the battery can, i.e. the part connecting the first end portion to the second end portion. It may be understood that the crimping portion and the beading portion are also included in the side of the battery can.

In the lithium secondary battery according to an aspect of the present disclosure, when the pressure in the battery can increases, at least a portion of the electrode assembly is ejected with the strong force through the first end portion of the battery can, so the part of the battery can other than the first end portion, i.e., the side of the battery can, is not destroyed. Additionally, in the lithium secondary battery according to an aspect of the present disclosure, because the electrode assembly is ejected out of the battery can in a very short time by the strong pressure, thermal runaway does not occur in the battery can before a predetermined part or more of the electrode assembly slips out of the battery can.

For example, the electrode assembly may be ejected through the first end portion of the battery can by the increase in internal pressure of the battery can in the overcharge condition by the repeated charge and discharge of the lithium secondary battery at the rate of from 1.5 C to 2 C, for example, at the rate of 1.7 C.

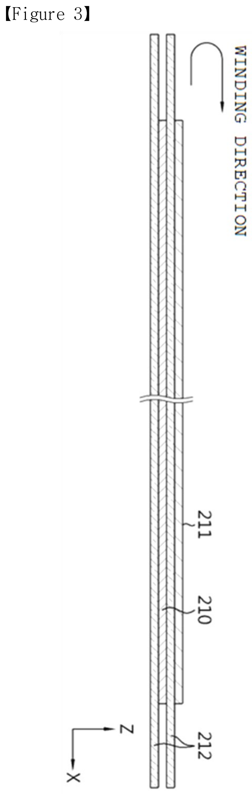

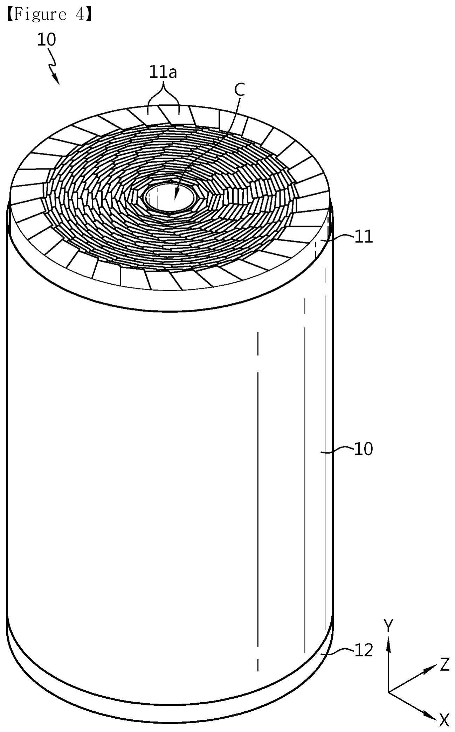

According to an example, the electrode assembly is a jellyroll-type electrode assembly including the positive electrode plate and the negative electrode plate wound in a direction with a separator interposed between the positive electrode plate and the negative electrode plate. FIG. 3 is a diagram showing the electrode assembly 10 before winding, and FIG. 4 is a diagram showing the electrode assembly 10 after winding.

As shown in FIG. 3, the electrode assembly 10 may have a structure in which the separator 212, the positive electrode plate 210, the separator 212, and the negative electrode plate 211 are stacked in a sequential order at least one time. This stack is wound in the x direction to form a jellyroll-type electrode assembly. When the jellyroll-type electrode assembly 10 is ejected through the first end portion E1 of the battery can 20, a part of the electrode assembly close to the winding center C may be ejected farther away from the battery can 20, into a spiral structure as shown in FIG. 2.

Referring again to FIGS. 1a and 1b, the first end portion E1 of the battery can 20 or the cap plate 40 disposed at the first end portion E1 include vent portions 41, 201.

FIG. 1a shows the structure in which the cap plate 40 disposed at the first end portion E1 of the battery can 20 has the vent portion 41. The cap plate 40 may be secured to the first end portion E1 of the battery can 20, and the cap plate 40 may include the vent portion 41. In this aspect, the electrode assembly 10 may be ejected through the first end portion E1 of the battery can 20 through destruction of the structure for securing the cap plate 40 to the first end portion E1 of the battery can 20 or fracture of the vent portion 41.

FIG. 1b shows the structure in which the vent portion 201 is present at the first end portion E1 of the battery can 20. The battery of FIG. 1b has the opening portion at the second end portion E2 of the battery can, and the cap plate 40 is disposed at the second end portion E2. In this instance, the electrode assembly 10 may be ejected through the first end portion E1 of the battery can 20 through fracture of the vent portion 201.

The vent portions 41, 201 correspond to an area that is formed at a part of the cap plate 40 or the battery can 20 and is structurally weaker than the surrounding area to be easily ruptured when the internal pressure is applied. The vent portions 41, 201 may be, for example, an area having a smaller thickness than the surrounding area. To realize the smaller thickness, the vent portions 41, 201 may include a notch.

According to an aspect, the internal pressure at which the vent portion is ruptured may be 21 kgf/cm² or more, 21.5 kgf/cm² or more, 22 kgf/cm² or more, 22.5 kgf/cm²or more, 23 kgf/cm²or more, 23.5 kgf/cm²or more, 24 kgf/cm² or more, 24.5 kgf/cm² or more, 25 kgf/cm² or more, more than 25 kgf/cm², 25.5 kgf/cm² or more, 26 kgf/cm² or more, 26.5 kgf/cm² or more, or 27 kgf/cm² or more. According to an aspect, the internal pressure at which the vent portion is ruptured may be less than or equal to the pressure at which the cap plate is separated from the battery can. For example, when the battery can includes the means for securing the cap plate, for example, the crimping portion, the internal pressure at which the vent portion is ruptured may be less than or equal to the pressure at which the crimping portion is uncrimped. As another example, when the cap plate is joined to the battery can by welding, the internal pressure at which the vent portion is ruptured may be less than or equal to the pressure at which the cap plate is separated from the battery can due to damage to the joined part at the weld. The internal pressure at which the vent portion is ruptured may be 29 kgf/cm² or less, 28.5 kgf/cm² or less, 28 kgf/cm² or less, 27.5 kgf/cm² or less, or 27 kgf/cm² or less. According to an aspect, the internal pressure at which the vent portion is ruptured may be 21 kgf/cm² or more and 29 kgf/cm² or less, 24 kgf/cm² or more and 29 kgf/cm² or less, more than 25 kgf/cm² and 29 kgf/cm² or less, or any range formed by a combination of the previously described endpoints. When the internal pressure at which the vent portion is ruptured is outside the range described above, the electrode assembly may not be ejected out of the battery can. Alternatively, if the electrode assembly is ejected, the electrode assembly may not be ejected through only the first end portion of the battery can, causing rupture of the side portion of the battery can. Accordingly, when the internal pressure at which the vent portion is ruptured is within the range described above, it may be possible to improve the safety of the battery and the battery can by having at least a portion of the electrode assembly be ejected through the first end portion of the battery can without ruptures in the side portion of the battery can. The internal pressure at which the vent portion is ruptured may be depend, at least in part, on the shape, size, material, or thickness of the vent portion, a thickness difference between the vent portion and the surrounding area, and so on.

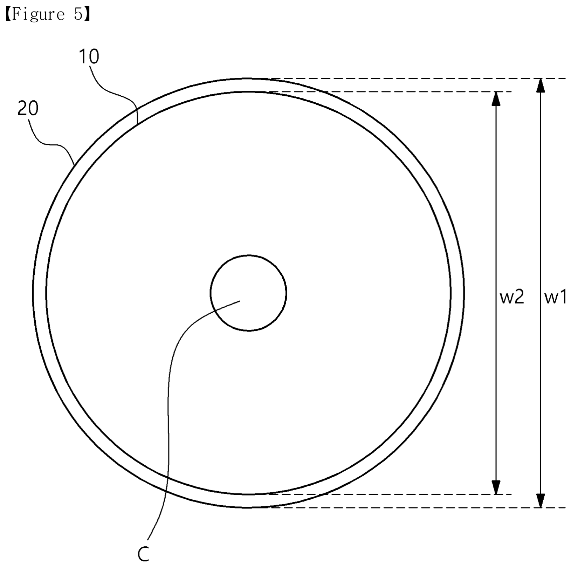

Referring now to FIG. 5, according to an aspect, a ratio of the maximum width w2 in the cross section of the electrode assembly 10 in the direction perpendicular to the winding axis to the maximum width w1 in the cross section of the battery can 20 in the direction perpendicular to the winding axis may be less than 1. When the lithium secondary battery is cylindrical in shape, the maximum width w1 or w2 in the cross section of the battery can 20 or the electrode assembly 10 respectively in the direction perpendicular to the winding axis may be the diameter of the battery can 20 or the electrode assembly 10 passing through the winding axis (the winding center C). FIG. 5 shows the cross section of the electrode assembly 10 in the direction perpendicular to the winding axis, and the ratio of the maximum width w2 of the electrode assembly 10 to the maximum width w1 of the battery can 20 may be less than 1. For example, the ratio of w2 to w1 may be 0.995 or less, 0.99 or less, 0.985 or less, 0.98 or less, 0.975 or less, 0.97 or less, 0.968 or less, or 0.965 or less. According to an aspect, after injection of an electrolyte solution into the battery can and before the electrode assembly is ejected, such that the electrode assembly is filled with the electrolyte solution, the ratio of the maximum width in the cross section of the electrode assembly in the direction perpendicular to the winding axis to the maximum width in the cross section of the battery can in the direction perpendicular to the winding axis may be less than 1. According to an aspect, before injection of the electrolyte solution into the battery can, the ratio of the maximum width in the cross section of the electrode assembly in the direction perpendicular to the winding axis to the maximum width in the cross section of the battery can in the direction perpendicular to the winding axis may be less than 1. As the maximum width in the cross section of the electrode assembly in the direction perpendicular to the winding axis is smaller, the electrode assembly has low physical resistance when it is ejected out of the batter can and thus the force by which the electrode assembly is ejected through the first end portion of the battery can may be greater. Accordingly, by adjusting the ratio of the maximum width in the cross section in the vertical direction of the winding axis of the electrode assembly to the maximum width in the cross section in the vertical direction of the winding axis of the battery can as described above, the rupture of the side portion of the battery can can be prevented.

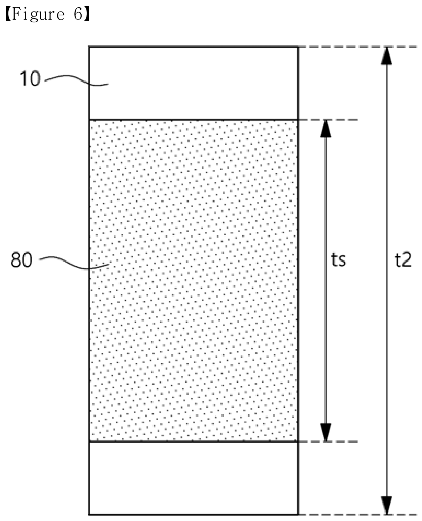

According to an aspect of the present disclosure, a sealing tape including polypropylene or polyimide may be attached to the outermost end portion of the electrode assembly. In some aspects of the present disclosure, the sealing tape may comprise polypropylene. Referring now to FIG. 6, the sealing tape 80 is attached to the outer surface of the electrode assembly 10. When the electrode assembly 10 is a jellyroll type, the sealing tape 80 may play a role in securing the outermost end portion of the electrode assembly 10. The sealing tape 80 is attached to cover at least part of the side of the electrode assembly including the outermost end portion of the electrode assembly 10.

The surface of the sealing tape 80 that contacts the battery can may be made of a material that does not react with the electrolyte solution solvent and can maintain its original shape after exposure to the electrolyte solution solvent. For example, the surface of the sealing tape 80 that contacts the battery can may be made of polypropylene or polyimide. Because the polypropylene or polyimide does not react with the solvent of electrolyte solution it can maintain the original shape, as described above. Due to the presence of the sealing tape as described above, the electrode assembly has low physical resistance when it is ejected out of the batter can and thus the side portion of the battery can can be prevented from being ruptured by allowing at least a part of the electrode assembly to easily be ejected out of the battery can. In addition, use of such a sealing tape 80 may cause the electrode assembly 10 to be ejected with a strong force through the first end portion E1 of the battery can. This may be due at least in part to the relatively smooth surface of the polypropylene or polyimide material. According to one or more aspects, the sealing tape 80 includes a substrate and an adhesive layer. The substrate is made of polypropylene or polyimide. The adhesive layer is attached to the side of the electrode assembly including the outermost end portion of the electrode assembly 10. Here, the adhesive layer is not limited to a particular type, and may include any known type in the art. For example, the adhesive layer may be made of any material that does not cause chemical reaction to the battery, and may include, for example and without limitation, an acrylic adhesive, or an SBR-based adhesive.

The sealing tape 80 may have a width ts that is 0.1 times or more, 0.2 times or more, 0.3 times or more, 0.4 times or more, 0.5 times or more, 0.6 times or more, 0.7 times or more, or 0.8 times or more than the distance t2 between the two end portions of the electrode assembly 10 or the length of the battery can (the distance between the first end portion E1 and the second end portion E2) in the axial direction Y of the winding axis of the electrode assembly 10. Additionally, the sealing tape 80 may have the width ts that is 0.95 times or less, 0.9 times or less, 0.8 times or less, 0.7 times or less, 0.6 times or less, or 0.5 times or less than the distance t2 between the two end portions of the electrode assembly 10 or the length of the battery can (the distance between the first end portion E1 and the second end portion E2) in the axial direction Y of the winding axis of the electrode assembly 10. The sealing tape 80 may have a length that is 0.1 times or more, 0.2 times or more, 0.3 times or more, 0.4 times or more, 0.45 times or more, 0.5 times or more, 0.6 times or more, 0.7 times or more, 0.8 times or more, 0.9 times or more, or 0.95 times or more than the outermost circumference of the electrode assembly 10 in the circumferential direction X of the electrode assembly 10. The sealing tape 80 may have the length that is 1 time or less, or 0.98 times or less than the outermost circumference of the electrode assembly 10 in the circumferential direction X of the electrode assembly 10. Because the sealing tape having the above-described width and length is made of polypropylene or polyimide on the surface that contacts the battery can, it may cause the electrode assembly 10 to be ejected with the strong force through the first end portion E1 of the battery can. For example, when the lithium secondary battery is a 4680 cell, the width fs of the sealing tape 80 may range from 30 mm to 65 mm, and the length in the circumferential direction X of the electrode assembly 10 may range from 130 mm to 135 mm.

According to an aspect, as shown in FIGS. 1a and 1b, the first current collector plate 30 is included between the first end portion E1 of the battery can 20 and the electrode assembly 10.

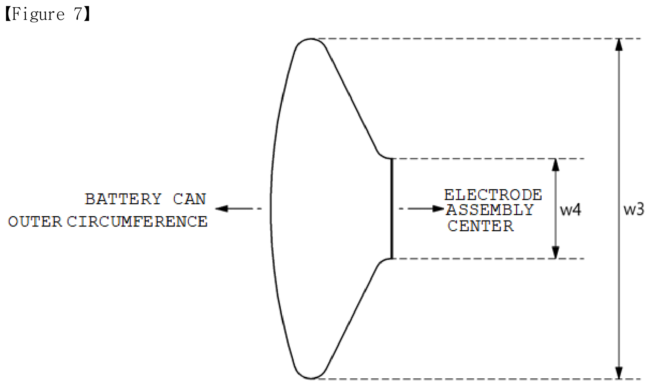

According to an aspect, the first current collector plate may have a battery can coupling portion having a tapered structure. The tapered structure may be a part that is welded to the battery can. Using the first current collector plate comprising a battery can coupling portion having the tapered structure may allow the first current collector plate to easily break when the electrode assembly 10 passes through the first end portion E1 of the battery can 20. This may minimize the effect of the first current collector plate on the ejection of the electrode assembly 10. Therefore, when adopting a tapered structure as described above, rupture of the side portion of the battery can can be prevented or minimized when the pressure inside the battery can increases. FIG. 7 shows the battery can coupling portion having the tapered structure in the first current collector plate. The tapered structure may have a minimum width w4 closer to the center of the battery can or the electrode assembly. The tapered structure may have a maximum width w3 in a direction perpendicular to the diameter passing through the center axis of the battery can and the electrode assembly. A ratio of w4 to w3 may be 0.7 or less, 0.6 or less, 0.5 or less, 0.45 or less, 0.4 or less, or 0.3 or less. The minimum width w4 of the tapered structure close to the center of the battery can and the electrode assembly may be equal to the width of a connection portion 33b described in greater detail below.

According to an aspect, as shown in FIG. 1a, the first current collector plate 30 includes a support portion 31 located on one surface of the electrode assembly 10 and the plurality of battery can coupling portions 33 extended from the support portion 31 and coupled to the inner surface of the battery can 20. At least one of the support portion 31 or the battery can coupling portions 33 may be electrically connected to the electrode assembly 10. For example, a tab (an uncoated portion) of the electrode assembly may be coupled to at least one of the support portion 31 or the battery can coupling portion 33 of the first current collector plate 30.

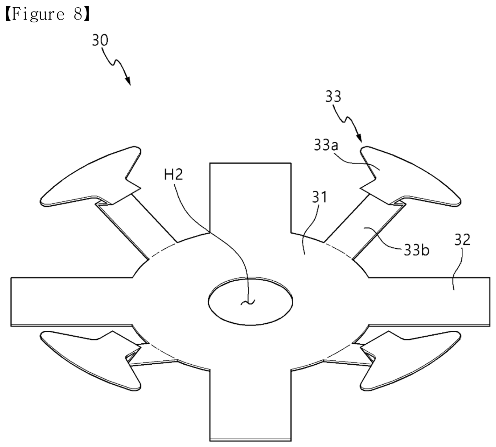

Referring now to FIG. 4, according to a further aspect, the electrode assembly 10 may include the uncoated portion 11 that acts as the tab because an active material layer is not formed at the area of contact with the first current collector plate 30. Referring again to FIG. 1a, the first current collector plate 30 may further include a tab coupling portion 32 coupled to the uncoated portion. As shown in FIG. 8, the tab coupling portion 32 and the battery can coupling portion 33 may have a structure in which they are indirectly connected through the support portion 31, and are not directly connected to each other. That is, because each of the tab coupling portion 32 and the battery can coupling portion 33 is extended from the support portion 31, they are not directly connected to each other, but are electrically connected through the support portion 31. With the above-described structure, when an external impact is applied to the battery 1, it may be possible to minimize the likelihood of damage to the coupled part of the current collector plate 30 and the electrode assembly 10 and the coupled part of the current collector plate 30 and the battery can 20.

The tab coupling portion 32 and/or the battery can coupling portion 33 may be one tab coupling portion 32 and/or one battery can coupling portion 33, respectively, but may include a plurality of tab coupling portions 32 and/or a plurality of battery can coupling portions 33. The at least one tab coupling portion 32 and the at least one battery can coupling portion 33 may be arranged radially or approximately in an cross shape, or a combination thereof, relative to the central portion of the first current collector plate 30. In another aspect, each of the plurality of battery can coupling portions 33 may be disposed between the adjacent tab coupling portions 32.

Referring again to FIG. 1a, the support portion 31 and the plurality of tab coupling portions 32 are disposed on the electrode assembly 10. The tab coupling portion 32 is coupled to the uncoated portion 11 of the electrode assembly 10. The tab coupling portion 32 may be coupled to the uncoated portion 11 by welding along the radial direction of the electrode assembly 10. For example, the tab coupling portion 32 may be weld-coupled to the uncoated portion 11 in parallel to the first or second end portion of the battery can 20.

Meanwhile, not only the tab coupling portion 32 but also the support portion 31 may be coupled to the uncoated portion 11. The tab coupling portion 32 and the uncoated portion 11 may be coupled by welding. In the case of the battery can 20 having the beading portion 21, the support portion 31 and the tab coupling portion 32 are located at the lower position than the beading portion 21 (inside of the battery can).

Referring again to FIG. 1a and FIG. 8, according to an aspect, the support portion 31 may have a current collector plate hole H2 at a location corresponding to a winding hole H1 formed at the approximately central portion of the electrode assembly 10. The winding hole H1 and the current collector plate hole H2 may be in communication with each other and may act as a passage for insertion of a welding rod or irradiation of a laser beam for welding between the terminal 50 and/or the second current collector plate P or welding between the terminal 50 and the lead tab (not shown). Here, the second current collector plate P may be disposed between the second end portion E2 of the battery can 20 and the electrode assembly 10.

The current collector plate hole H2 may have a diameter that is substantially equal to or larger than the winding hole H1 of the electrode assembly 10 such that the current collector plate 30 does not cover the winding hole H1 formed at the core of the electrode assembly 10. In this case, because the winding hole H1 of the electrode assembly is not covered with the current collector plate 30, it may be possible to prevent the decrease in injection performance, and allow for the insertion of the device for welding or a sufficient space for laser irradiation. Additionally, when the electrode assembly is ejected through the first end portion of the battery can by the increased internal pressure in the battery can, the upper surface of the separator and the electrode plate located at or near the winding center of the electrode assembly 10 (adjacent to the first end portion of the battery can) may slip out through the first end portion by the strong pressure of the gas released through the first end portion at the winding center C of the electrode assembly 10.

Referring still to FIG. 1a and FIG. 8, the plurality of tab coupling portions 32 may be extended toward the sidewall of the battery can 20 approximately radially from the support portion 31 of the first current collector plate 30. Each of the plurality of tab coupling portions 32 may be located apart from each other along the circumference of the support portion 31. Meanwhile, to increase the coupling strength and reduce the electrical resistance through the increased coupling area between the first current collector plate 30 and the electrode assembly 10, not only the tab coupling portion 32 but also the support portion 31 may be coupled to the uncoated portion 11.

Referring now to FIGS. 1a, 4, and 8, at least part of the uncoated portion 11 may be formed in bent shape such that the end portion is approximately parallel to the tab coupling portion 32. In this case, the bending may be, for example, made toward the winding center C of the electrode assembly 10. When the end portion of the uncoated portion 11 is formed and coupled to the tab coupling portion 32 in parallel to the tab coupling portion 32, it may be possible to increase the coupling area, thereby improving the coupling strength and reducing the electrical resistance. It may also be possible to minimize the height of the electrode assembly 10, thereby improving the energy density. Meanwhile, the bent segment 11a of the uncoated portion 11 may be overlapped in multiple layers. When the uncoated portion 11 is overlapped in multiple layers, the tab coupling portion 32 of the first current collector plate 30 may be coupled to a coupling surface formed by bending the uncoated portion 11 to form the multiple overlapping layers.

Referring again to FIG. 1a and FIG. 8, the plurality of battery can coupling portions 33 may extend toward the sidewall of the battery can 20 approximately radially from the support portion 31 of the first current collector plate 30. Each of the plurality of battery can coupling portions 33 may be located apart from each other along the circumference of the support portion 31. The at least one battery can coupling portion 33 may be located between the adjacent tab coupling portions 32. The plurality of battery can coupling portions 33 may be coupled to the inner surface of the battery can 20. For example, the battery can coupling portion 33 may be coupled to the beading portion 21. In one or more aspects, the battery can coupling portions 33 may be coupled to the upper surface of the beading portion 21. In the battery 1 of the present disclosure, when this structure is applied, the battery can coupling portion 33 may be naturally mounted on the beading portion 21 through the process of accommodating the electrode assembly 10 coupled with the first current collector plate 30 in the battery can 20. Accordingly, the welding process of the battery can 20 and the first current collector plate 30 may be easily performed. The welding for coupling of the battery can 20 and the first current collector plate 30 may include, for example, laser welding, resistance welding, ultrasonic welding, soldering, or spot welding. The battery can coupling portion 33 may be weld-coupled to the beading portion 21 to form multiple current paths to limit the resistance level below approximately 4 milliohms that is suitable for fast charging.

The battery can coupling portion 33 includes a coupling portion 33a coupled to the beading portion 21 on the inner surface of the battery can 20 and the connection portion 33b connecting the support portion 31 to the coupling portion 33a.

The coupling portion 33a is coupled to the inner surface of the battery can 20. When the battery can 20 has the beading portion 21, the coupling portion 33a may be coupled to the beading portion 21 as described above. The coupling portion 33a may have a shape that conforms to the shape of the upper surface of the beading portion 21. According to an aspect, for stable contact and coupling, both the beading portion 21 and the coupling portion 33a may be extended along a direction approximately parallel to the lower surface of the battery can 20, i.e., a direction approximately perpendicular to the sidewall of the battery can 20. The coupling portion 33a may have a flat surface which is coupled to the upper surface of the beading portion 21 facing the open portion. That is, the coupling portion 33a includes the flat portion approximately parallel to the lower surface of the battery can 20. When the battery can coupling portion 33 stably contacts the beading portion 21, welding between the two components may be done well, thereby improving the coupling strength between the two components and minimizing the resistance increase at the coupled part.

The connection portion 33b may be extended in the radial direction and the winding axial direction. The connection portion 33b may have an upwardly convex structure (toward the first end portion E1 of the battery can 20), and may include at least one bending portion. For example, the boundary of the coupling portion 33a and the connection portion 33b may be bent at an obtuse angle. The slope of the connection portion 33b may decrease stepwise or gradually as it goes toward the beading portion.

As shown in FIG. 8, the connection portion 33b may have at least one bending portion where the extension direction changes at least one time between the support portion 31 and the coupling portion 33a. That is, the connection portion 33b may have, for example, a spring-like structure or a bellows-like structure that can be contracted and stretched within a predetermined range. Meanwhile, the connection portion 33b may be elastically biased upward by the bending portion. This structure of the connection portion 33b may bring the coupling portion 33a into close contact with the beading portion 21 in the process of accommodating the electrode assembly 10 coupled with the first current collector plate 30 in the battery can 20 even in the presence of height dispersion of the electrode assembly 10 within a predetermined range. Additionally, by this structure of the connection portion 33b, it may be possible to achieve more stable shaping in the sizing process.

Referring again to FIG. 1a and FIG. 8, the coupling portion 33a may be weld-coupled to the upper surface of the beading portion 21 (the upper surface of the upper beading portion). Moreover, the coupling portion 33a may be weld-coupled to the flat area on the upper surface of the beading portion 21. The weld area between the coupling portion 33a and the beading portion 21 may be narrower than the flat upper surface of the beading portion 21. When the connection portion 33b has the bending portion, the angle between the coupling portion 33a and the connection portion 33b may be acute due to the bending portion.

According to an aspect, when the first current collector plate is projected onto the open area of the first end portion of the battery can, the area of the projected part of the first current collector plate may range between 50% and 70%, based on the total open area of the first end portion. The open area of the first end portion of the battery can does not include the side thickness of the battery can. Additionally, when the width of the battery can is reduced due to the presence of the crimping portion 22 or the beading portion 21 at the first end portion side of the battery can, the open area of the first end portion refers to the open area having the minimum width. The projection of the first current collector plate refers to projection of the first current collector plate onto the open area in a direction parallel to the side of the battery can. The aforementioned area range may correspond to a flame release area, where the electrode assembly directly faces the opening portion of the first end portion of the battery can without the first current collector plate interposed therebetween.

According to an aspect, the flame release area may be approximately from 30% to 50% based on the total open area of the first end portion of the battery can. By controlling the flame release area whinin the above range, the pressure or flame can be effectively removed when the pressure inside the battery can increases, thereby preventing or minimizing rupture of the side portion of the battery can.

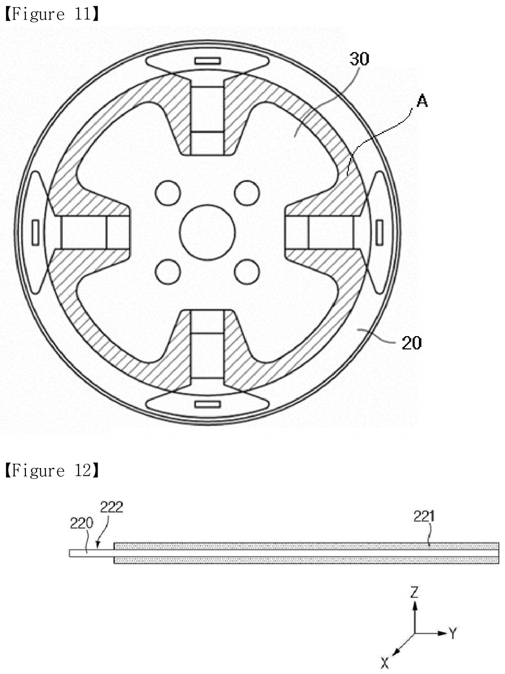

The flame release area may be an area excluding the projected area of the first current collector plate from the open area of the first end portion of the battery can, as shown in section A indicated by hatching in FIG. 11. The outer diameter of section A indicated by hatching in FIG. 11 is the outermost part of the open area of the first end portion of the battery can except the projected area of the crimping portion 22 or the beading portion 21 of the battery can. The flame release area is an area excluding the projected area of the first current collector plate from the entire area surrounded by the outer diameter of section A indicated by hatching in FIG. 11, i.e., the total open area. The flame release area range may play a role in reducing the resistance of the battery during the normal use of the battery, and making the first current collector plate easily break when the electrode assembly is ejected through the first end portion of the battery can. The flame release area range may be adjusted through the addition of a hole and/or a slit to the support portion 31, adjustment of the area of the support portion 31 and/or the tab coupling portion 32, or adjustment of the width of the connection portion 33b.

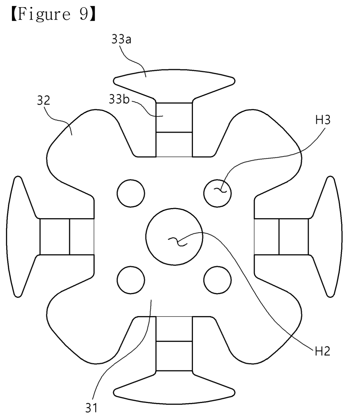

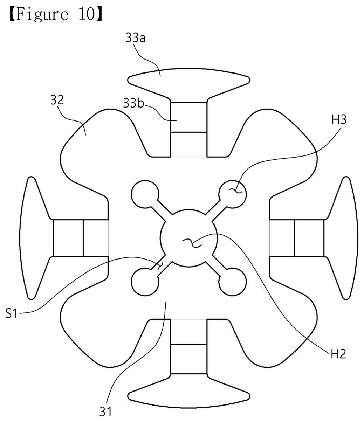

The flame release area may be 30% or more and 50% or less based on the total open area of the first end portion of the battery can, and the lower limit may be 30% or more, 35% or more, 36% or more, 37% or more, 38% or more, 39% or more, 40% or more, 41% or more, 42% or more, 43% or more, 44% or more, 45% or more, 46% or more, or 47% or more. Referring now to FIG. 9, according to an aspect, the support portion 31 may include at least one hole H3. The hole H3 may include one or two or more holes H3 on the circumference of the current collector plate hole H2. As shown in FIG. 10, the support portion 31 may further include a slit S1 extended from the hole H3 and the current collector plate hole H2. The size or area of the hole H3 and the slit S1 may be designed in view of the area of the first current collector plate or the reduction in electrical resistance. Additionally, the width of the connection portion 33b of the first current collector plate 30 may be adjusted to disconnect the connection portion 33b, making the first current collector plate 30 easily break when the electrode assembly is ejected through the first end portion of the battery can. For example, when the electrode assembly is ejected through the first end portion of the battery can, 50% or more, 70% or more, 75% or more of the plurality of connection portions 33b may be completely disconnected.

The size of the hole H3, the area (or the width) of the slit S1, and/or the width of the connection portion 33b of the first current collector plate 30 may be designed in such a range that the area of the projected part of the first current collector plate is between 50% and 70%, based on the total open area of the first end portion, when the first current collector plate is projected onto the open area of the first end portion of the battery can. In other words, the size of the hole H3, the area (or the width) of the slit, and/or the width of the connection portion 33b of the first current collector plate 30 may be designed such that the flame release area is approximately between 30% and 50%, between 35% and 50%, between 36% and 50%, between 34% and 36%, between 38% and 40%, or between 44% and 47%, based on the total open area of the first end portion of the battery can.

According to an aspect, the thickness of the first current collector plate may be 0.4 mm or less, 0.35 mm or less, 0.3 mm or less, 0.25 mm or less, or 0.2 mm or less. When the thickness of the first current collector plate is thin, the side rupture of the battery can caused by the electrode assembly can be effectively prevented even when the pressure inside the battery can increases. Specifically, since the first current collector plate is easily lost even when the pressure inside the battery can increases, the electrode assembly can be easily ejected through the first end.

FIG. 12 is a diagram showing the cross-sectional structure of the electrode plate (the positive electrode plate or the negative electrode plate) according to an aspect of the present disclosure. Referring to FIG. 3 and FIG. 11, the positive electrode plate 210 and the negative electrode plate 211 may have a structure in which an active material layer 221 is formed on a sheet-shaped current collector 220. The sheet shaped current collector 220 may include an uncoated portion 222 where the active material layer 221 is not formed.

The use of the positive electrode plate 210 and the negative electrode plate 211 including the uncoated portion 222 may form a battery having a tab-less structure in which a separate electrode tab is absent. In such batteries having a tab-less structure at least part of the uncoated portion of the positive electrode plate 210 and the negative electrode plate 211 acts as an electrode tab. Specifically, the uncoated portion 222 may be formed at one end portion of the current collector 220 and extend along the winding direction X. A current collector plate may be coupled to each of the positive electrode plate uncoated portion and the negative electrode plate uncoated portion, and connected to each of the positive and negative electrode terminals to realize a battery having a tab-less structure. The reference numerals 11 and 12 in FIGS. 1a and 1B indicate the uncoated portion of the negative electrode plate 211 and the uncoated portion of the positive electrode plate 210, of FIG. 3 respectively.

The positive electrode plate uncoated portion and the negative electrode plate uncoated portion may be shaped into a plurality of independently bendable segments 11a**,** and at least part of the plurality of segments may be bent toward the winding center C of the electrode assembly as depicted in FIG. 4. The segments may be formed by processing the uncoated portion of the positive electrode plate and the negative electrode plate through a metal foil cutting process such as laser notching, ultrasonic cutting, or punching.

When the uncoated portion of the positive electrode plate and the negative electrode plate is shaped into the plurality of segments, it may be possible to reduce stress applied to the uncoated portion during bending. This may prevent deformation or destruction of the uncoated portion, and improve welding characteristics with the current collector plate.

The current collector plate and the uncoated portion may be joined by welding. To improve welding characteristics, a strong pressure may be applied to the weld area of the uncoated portion to make the uncoated portion as flat as possible. However, in the bending process, the uncoated portion may be irregularly distorted and deformed. The deformed part may contact the electrode of the opposite polarity, causing internal shorts or microcracks in the uncoated portion. However, when the uncoated portion of the positive electrode plate and the negative electrode plate is shaped into the plurality of independently bendable segments, it may be possible to mitigate stress applied to the uncoated portion during bending. This may minimize deformation and destruction of the uncoated portion.

Additionally, when the uncoated portion is shaped into the segments as described above, overlap may occur between the plurality of segments during bending. This may increase the welding strength with the current collector plate, and prevent ablation of the separator or the active material due to laser penetration into the electrode assembly when the advanced technology such as laser welding is used. According to one or more aspects of the present disclosure, at least part of the plurality of bent segments may be overlapped on the top and bottom of the electrode assembly, and the current collector plate may be coupled to the plurality of overlapped segments.

For example, the battery having a tab-less structure may be manufactured through the following method. First, the separator, the positive electrode plate, the separator, and the negative electrode plate are stacked in a sequential order such that the uncoated portion 222 of each of the positive electrode plate 210 and the negative electrode plate 211 is disposed in opposite directions. The stack is wound in a winding direction to manufacture the electrode assembly. Subsequently, as shown in FIG. 4, the positive electrode plate uncoated portion 12 and the negative electrode plate uncoated portion 11 may be bent toward the winding center C. The current collector plate may be coupled to each of the positive electrode plate uncoated portion 12 and the negative electrode plate uncoated portion 11 by welding, and the current collector plate may be connected to the electrode terminal to manufacture the battery having a tab-less structure.

The current collector plate includes the first current collector plate 30 and the second current collector plate P as shown in FIGS. 1a or 1B. Because the current collector plate has a larger cross-sectional area than the electrode tab, and resistance is inversely proportional to the cross-sectional area of the passage through which the electric current flows, when the lithium secondary battery is formed with the above-described structure, the battery resistance may be greatly reduced. The first current collector plate 30 and the second current collector plate P may be coupled to the negative electrode plate uncoated portion 11 and the positive electrode plate uncoated portion 12, respectively, or may be coupled to the positive electrode plate uncoated portion 12 and the negative electrode plate uncoated portion 11, respectively, and each is connected to the electrode terminal (i.e., the positive or negative terminal).

The current collector plate may be made of a conductive metal such as aluminum, copper, or nickel. The lead may be additionally connected to the first current collector plate and/or the second current collector plate as needed. The lead may play a role in electrically connecting the current collector plate to the cap plate and/or the electrode terminal. The coupling of the lead and the other component may be done through welding. For example, the current collector plate may be integrally formed with the lead. In this case, the lead may have a long plate shape extended outward from the central portion of the current collector plate.

The first current collector plate 30 is coupled between the electrode assembly 10 and the first end portion E1 of the battery can, and the second current collector plate P is coupled between the electrode assembly 10 and the second end portion E2 of the battery can. A surface of the current collector plate P may be coupled to the uncoated portion 11 of the negative electrode plate or the uncoated portion 12 of the positive electrode plate, and the opposite surface may be electrically coupled to of the inner bottom surface the battery can 20 or the cap plate. In this instance, the coupling may be done by laser welding, resistance welding, ultrasonic welding, or soldering.

The battery 1 according to the present disclosure may further include the insulator S. The insulator S of FIGS. 1a and 1B may cover at least a portion of the second current collector plate P to prevent the direct contact between the second current collector plate P and the inner peripheral surface of the battery can 20. The insulator S may be made of an insulating polymer resin such as, for example, polyethylene, polypropylene, polyimide, or polybutyleneterephthalate.

According to one or more aspects of the present disclosure, the battery can 20 may be a cylindrical container having the opening portion on top (the first end portion or the second end portion), and may be made of a conductive metal such as aluminum or steel. According to an aspect, the battery can 20 is electrically connected to the uncoated portion 11 of the negative electrode plate, and acts as the negative terminal to transfer the electric current from the external power source to the negative electrode plate when the battery can 20 contacts the external power source.

According to an aspect, the thickness of the side of the battery can 20 may range between 0.1 mm and 0.4 mm. For example, the thickness of the side of the battery can 20 may be between 0.13 mm and 0.32 mm. By improving safety of the battery according to the above-described aspects, it may be possible to ensure safety when the thickness of the battery can lies in the aforementioned range.

The lithium secondary battery according to the present disclosure may be a high-capacity secondary battery having a capacity of 25 Ah or more.

The lithium secondary battery according to the present disclosure may be a large battery having a ratio of form factor (defined as a value obtained by dividing the diameter of the cylindrical battery by its height, i.e., a diameter(Φ)-to-height(H) ratio) of 0.4 or more. Here, the form factor refers to a value relating the diameter (the maximum width) and height of the battery.

The battery according to the present disclosure may be, for example, a 46110 cell (diameter 46 mm, height 110 mm, form factor ratio 0.418), a 4875 cell (diameter 48 mm, height 75 mm, form factor ratio 0.640), a 48110 cell (diameter 48 mm, height 110 mm, form factor ratio 0.436), a 4880 cell (diameter 48 mm, height 80 mm, form factor ratio 0.600), a 4680 cell (diameter 46 mm, height 80 mm, form factor ratio 0.575), or a 4695 cell (diameter 46 mm, height 95 mm, form factor ratio 0.484). In the number indicating the form factor, the first two numbers indicate the diameter of the battery, and the next two or three numbers indicate the height of the battery.

According to the above-described aspects of the present disclosure, the large battery having the ratio of form factor of 0.4 or more may achieve high safety.

Meanwhile, the lithium secondary battery according to the present disclosure is a battery having a tab-less structure including no electrode tab.

The battery having a tab-less structure may have a structure in which each of the positive electrode plate and the negative electrode plate includes the uncoated portion where the active material layer is not formed. The positive electrode plate uncoated portion and the negative electrode plate uncoated portion are located at the top and bottom of the electrode assembly, respectively. Current collector plates are coupled to the positive electrode plate uncoated portion and the negative electrode plate uncoated portion, respectively, and the current collector plates are connected to the electrode terminals. FIGS. 1a and 1B are cross-sectional views of cylindrical batteries having a tab-less structure according to aspects of the present disclosure. However, the structure of the cylindrical battery of the present disclosure is not limited to the disclosed aspects in FIGS. 1a and 1B.

The positive electrode plate, the negative electrode plate, the separator and the electrolyte may include those well known or commonly used in the corresponding field without limitation.

For example, the positive electrode active material may include alkali metal compounds represented by the general chemical formula A[AₓM_{y}]O_{2+z}, where A includes at least one of Li, Na or K; M includes at least one of Ni, Co, Mn, Ca, Mg, Al, Ti, Si, Fe, Mo, V, Zr, Zn, Cu, Al, Mo, Sc, Zr, Ru, or Cr; x ≥ 0, 1 ≤ x + y ≤2, 0.1 ≤ z ≤ 2; and the stoichiometric coefficients x, y and z are selected to keep the compound electrically neutral.

In another example, the positive electrode active material may include alkali metal compounds xLiM¹O₂(1x)Li₂M²O₃, where M¹ includes at least one element having the average oxidation state of 3; M² includes at least one element having the average oxidation state of 4; and 0 ≤ x ≤ 1. Examples of such positive electrode active materials are disclosed in US 6,677,082, US 6,680,143.

In still another example, the positive electrode active material may include lithium metal phosphate represented by the general chemical formula LiₐM¹ₓFe₁ₓM²_{y}P_{1y}M³_{z}O_{4z}, where M¹ includes at least one of Ti, Si, Mn, Co, Fe, V, Cr, Mo, Ni, Nd, Al, Mg or Al; M² includes at least one of Ti, Si, Mn, Co, Fe, V, Cr, Mo, Ni, Nd, Al, Mg, Al, As, Sb, Si, Ge, V or S; M³ includes halogen group elements optionally including F; 0 < a ≤ 2, 0 ≤ x ≤ 1, 0 ≤ y < 1, 0 ≤ z < 1; and the stoichiometric coefficients a, x, y and z are selected to keep the compound electrically neutral. Alternatively, the lithium metal phosphate represented by the general chemical formula Li₃M₂(PO₄)₃, where M includes at least one of Ti, Si, Mn, Fe, Co, V, Cr, Mo, Ni, Al, Mg or Al.

According to one or more aspects of the present disclosure, the positive electrode active material may include primary particles and/or secondary particles formed by agglomeration of the primary particles.

For example, the negative electrode active material may include carbon materials, lithium metal or lithium metal compounds, silicon or silicon compounds, or tin or tin compounds. The silicon compounds may include pure silicon, silicon oxide, silicon carbon composites, or silicon metal alloys. Metal oxides having a potential of less than 2 V, such as TiO₂ or SnO₂, may be also used as the negative electrode active material. The carbon materials may include low crystalline carbon, or high crystalline carbon.

The separator may include porous polymer films. For example, porous polymer films made of polyolefin-based polymer such as ethylene homopolymer, propylene homopolymer, ethylene/butene copolymer, ethylene/hexene copolymer, or ethylene/methacylate copolymer, may be used singly or in a stack. As another example, the separator may include commonly used porous nonwoven fabrics, for example, nonwoven fabrics made of high melting point glass fibers or polyethyleneterephthalate fibers.

The separator may include a coating layer of inorganic particles on at least one surface. Additionally, the separator itself may be a coating layer of inorganic particles. The particles that constitute the coating layer may have a structure in which the particles are held together with a binder such that interstitial volume exists between the adjacent particles.

The inorganic particles may include inorganic matter having the dielectric constant of 5 or more. Non-limiting examples of the inorganic particles may include at least one material selected from the group consisting of Pb(Zr,Ti)O₃ (PZT), Pb₁ₓLaₓZr_{1y}Ti_{y}O₃ (PLZT), PB(Mg₃Nb_{2/3})O₃PbTiO₃ (PMNPT), BaTiO₃, hafnia (HfO₂), SrTiO₃, TiO₂, Al₂O₃, ZrO₂, SnO₂, CeO₂, MgO, CaO, ZnO and Y₂O₃.

The electrolyte may be a salt having a structure A⁺B⁻. Here, A⁺ includes an alkali metal cation such as Li⁺, Na⁺, K⁺ or a combination thereof. Additionally, B⁻ includes at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

Additionally, the electrolyte may be dissolved in an organic solvent. The organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ -butyrolactone, or a mixture thereof.

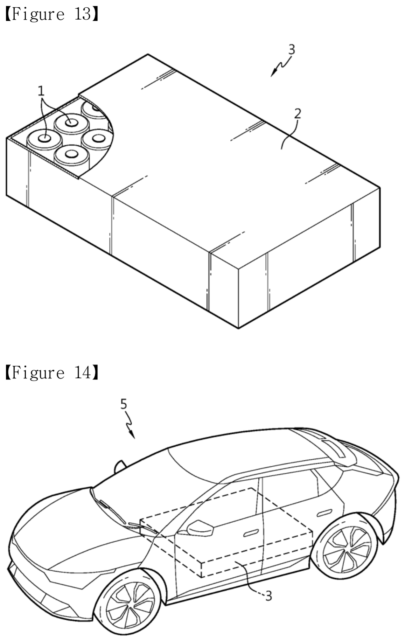

Referring to FIG. 13, a battery pack 3 includes a battery assembly in which a plurality of batteries 1 according aspects of the present disclosure are electrically connected to each other and a pack housing 2 accommodating the battery assembly. For convenience of illustration, some components such as a busbar for electrical connection, a cooling unit, or a power terminal are omitted from FIG. 13. Likewise, the electrical connection structure of the plurality of batteries 1 for the manufacture of the battery pack 3 is omitted.

Referring to FIG. 14, a vehicle 5 according to an aspect of the present disclosure may include, for example, an electric vehicle, a hybrid electric vehicle or a plug-in hybrid electric vehicle. The vehicle 5 may include the battery pack 3 according to an aspect of the present disclosure. The vehicle 5 may be a four-wheeled vehicle or a two-wheeled vehicle. The vehicle 5 operates with the power supplied from the battery pack 3 according to an aspect of the present disclosure. The vehicle can mitigate the effects of climate change by reducing or eliminating greenhouse gas emissions.

One aspect of the present disclosure provides a battery comprising a can, a jellyroll, and a cap plate. The can comprises a cylindrical body, a first wall at a first end of the cylindrical body, and a second wall at a second end of the cylindrical body. The cylindrical body has a diameter and a length between the first end and the second end along a central axis of the cylindrical body. The jellyroll is housed inside the cylindrical body and comprises an anode, a separator, and a cathode that are rolled together about the central axis. The foregoing battery comprises a rupture notch formed into the first wall or the second wall. The first wall comprises a cap plate air-tightly integrated to the cylindrical body in which an edge portion of the cylindrical body near the first end (hereinafter referred to as a "crimping portion" ) is crimped around a perimeter of the cap plate, wherein the crimping portion is configured to uncrimp when the internal pressure reaches an uncrimping pressure. The rupture pressure is configured to rupture and create an opening when an internal pressure of the battery reaches a rupture pressure. The rupture pressure is lower than the uncrimping pressure such that the crimping portion does not uncrimp when the internal pressure reaches the rupture pressure. The predetermined rupture pressure is set to be sufficient to create an explosive power to eject a portion of the jellyroll to outside the cylindrical body: such that the ejected portion extends telescopically along the central axis outside the cylindrical body in which an inner portion of the jellyroll ejects prior to an outer portion of the jellyroll that surrounds the inner portion inside the cylindrical body before rupture, such that a leading edge of the ejected portion reaches a distance that is at least ¼ of the length from the first end of the cylindrical body along the central axis, such that the ejected portion to outside the cylinder body is at least 25% of a mass of the jellyroll located inside the can prior to rupturing, and such that, being located outside the cylindrical body, the ejected portion would not cause any further chemical reactions that could lead to thermal runaway inside the cylindrical body.

In some embodiments, the predetermined rupture pressure is about 21kgf/cm² or higher. In some embodiments, the predetermined rupture ejection pressure is from about 25 kgf/cm² to about 29 kgf/cm². In some embodiments, the battery is a 46110 cell battery, a 4875 cell battery, a 48110 cell battery, a 4880 cell battery, a 4680 cell battery, or a 4695 cell battery. In some embodiments, the battery does not comprise another rupture notch or vent configured for venting gas. In some embodiments, the cylindrical body has a side portion that is ruptured at a side rupture pressure that is higher than the predetermined rupture pressure of the rupture notch. In some embodiments, the ejected portion of the jellyroll electrode assembly has a spiral structure. In some embodiments, a ratio of form factor of the battery is 0.4 or more. In some embodiments, the cylindrical body has a side portion with a thickness of from about 0.1 mm to about 0.4 mm. In some embodiments, the second wall is integrally formed with the cylindrical body. In some embodiments, the second wall is airtightly integrated with the cylindrical body with or without a seam connecting therebetween. In some embodiments, the rupture notch is formed into the cap plate of the first wall. In some embodiments, the rupture notch is formed into the second wall.

Another aspect of the present disclosure provides a battery pack comprising the battery provided herein. Another aspect of the present disclosure provides a vehicle comprising the battery pack provided herein.

### Thermal Runaway

Thermal runaway in batteries is a critical safety concern, particularly in lithium-ion batteries used in consumer electronics, electric vehicles, and renewable energy storage. Thermal runaway is a self-sustaining reaction where an increase in temperature causes further increases in temperature, leading to a rapid and uncontrollable rise in heat. In batteries, this can result in fires or explosions. Managing thermal runaway is essential for the safe operation of battery systems, especially as the demand for high-capacity batteries continues to grow.

### Possible Causes of Thermal Runaway

Thermal runaway can be caused by different reasons. For example, charging a battery beyond a certain level can cause excessive heat, leading to the decomposition of the electrolyte and the release of flammable gases. Manufacturing defects, mechanical damage, or degradation over time can cause internal short circuits; and these generate significant heat, potentially triggering thermal runaway. High external temperatures can overwhelm a battery's cooling mechanisms, causing an uncontrolled rise in temperature. Physical damage, such as punctures or deformation, can compromise the battery's internal structure, leading to short circuits and heat generation. Operating a battery at high discharge rates generates more heat; and if the heat exceeds the battery's capacity to dissipate it, thermal runaway may occur.

### Process of Thermal Runaway

At the initiation stage, external factors like overcharging, overheating, or mechanical damage cause a local rise in temperature within the battery cell. This initial heat can trigger chemical reactions, such as electrolyte decomposition. Then, the heat generated in the initiation stage causes further chemical reactions, producing more heat, and this can lead to a feedback loop where the temperature continues to rise. In battery packs, thermal runaway can spread from one cell to adjacent cells, leading to a large-scale event. This is particularly dangerous in applications like electric vehicles.

### Conventional Approaches for Prevention and Mitigation of Thermal Runaway

Conventional approaches for prevention and mitigation of thermal runaway include using cooling systems, battery management systems, safety mechanisms, and heat-resistant materials and barriers. Effective cooling systems can dissipate heat and prevent temperature build-up. Battery Management Systems can monitor and control the charging and discharging of batteries to prevent conditions that could lead to thermal runaway. Making batteries with materials that can withstand higher temperatures and incorporating physical barriers between cells can reduce the risk of thermal propagation. Incorporating safety features like thermal fuses, pressure relief valves and/or gas vents can help mitigate the effects of thermal runaway. For example, pressure relief valves and gas vents release the generated gas and heat before the battery internal pressure becomes too high. These valves and vents usually open to allow the gas and heat to escape when the battery internal pressure is relatively low. Similarly, a rupture notch may be implemented to rupture the battery can before the internal pressure becomes too high to avoid or minimize the chances of explosion.

### Novel Approach

Contrary to the conventional thinking of relieving pressure or releasing generated gas and heat using pressure relief valves and/or gas vents which open at relatively low pressure, the present disclosure provides a rupture notch that allows the battery' s internal pressure to build up and increase to a certain level to create an explosive power to eject out of the battery body a portion of the jellyroll electrode assembly that is sufficient to surprisingly prevent and/or mitigate and/or stop thermal runaway inside of the battery.

### Rupture Notch

According to some embodiments, the rupture notch 41, 201 may be at the first end portion E1 of the battery can 20, as shown in FIGS. 1a and 1B. In an embodiment as shown in FIG. 1a, the rupture notch 41 may be a part of the cap plate 40 which is air-tightly integrated to the battery can 20. In an embodiment as shown in FIG. 1B, the rupture notch 201 may be a part of the bottom plate of the battery. The rupture notch may include one or more weaker portions on the cap plate 40 or the bottom plate. In some embodiments, the rupture notch may be one weak portion in the shape of, for example, a circle, a square, or any other shape, around the center C shown in FIG. 4 and located in a middle portion of the cap plate 40 or the bottom plate of the battery. In some other embodiments, the rupture notch may include a plurality of weak portions that form a shape of, for example, a circle, a square, or any other shape, around the center C and located in a middle portion of the cap plate 40 or the bottom plate of the battery. When the battery internal pressure reaches a predetermined rupture pressure, the rupture notch is ruptured to create an opening (not shown) at the cap plate 40 or the bottom plate. The internal pressure that ruptures the rupture notch, or the predetermined rupture pressure, may depend on the shape, geometry, size, material, thickness, and/or surface treatment of the rupture notch, a thickness difference between the rupture notch and the surrounding area, and so on, which is known technology and is not discussed in detail herein.

### Crimping Portion

As shown in FIGS. 1a and 1B, the circumferential portion of the cap plate 40 is surrounded by a crimping portion 22 at the first end portion E1 or the second end portion E2. The crimping portion 22 secures the cap plate 40 to the end portion E1 or E2 of the battery can 20. The crimping portion 22 may be formed on a beading portion 21; and is extended and bent to surround the outer peripheral surface of the cap plate 40 disposed on the beading portion 21 and also surround a part of the upper surface of the cap plate 40. There may be an insulating sealing gasket G1 between the cap plate 40 and the crimping portion 22 to provide sealability therebetween, such that the cap plate 40 is air-tightly integrated to the battery can 20 of the battery.

### Form Factor and Predetermined Rupture Pressure

The predetermined rupture pressure is designed to be sufficient to create an explosive power to eject at least a portion of the jellyroll electrode assembly out of the battery can through the opening to a distance away from the first end portion E1 that is at least ¼ of the length of the cylindrical body of the battery can, such that the ejected portion of the jellyroll electrode assembly has a mass that is at least 25% of the total mass of the jellyroll electrode assembly before the ejection. The predetermined rupture pressure may be determined by the diameter (the maximum width) and/or length of the battery and/or the size of the opening. For example, to create the same explosive force, the bigger the opening, the higher the predetermined rupture pressure needs to be. For batteries with the same diameter, the longer the battery is, the more the mass of jellyroll electrode assembly has; and with openings of the same size when the rupture notch is ruptured, to eject the jellyroll electrode assembly to the same distance, the greater the explosive force needs to be, and thus the higher the predetermined rupture pressure needs to be. The predetermined rupture pressure may be determined in view of the battery' s form factor. Here, the form factor refers to a value indicating the diameter and length (or height) of the battery.

### Predetermined Rupture Pressure and Uncrimping Pressure

In embodiments, the rupture notch may be in the middle of the cap plate or bottom plate of the battery, and thus the opening created by rupturing of the rupture notch is also located in the middle of the cap plate or bottom plate. The uncrimping portion is designed to have an uncrimping pressure that is higher than the predetermined rupture pressure, so that the crimping portion 22 does not uncrimp when the internal pressure reaches the predetermined rupture pressure and ruptures the rupture notch 41, 201. As such, the inner portion of the jellyroll electrode assembly ejects through the opening before the outer portion of the jellyroll electrode assembly surrounding the inner portion prior to the ejection. The crimping portion 22 may be made of a material and/or have a thickness, size, and/or shape to have a relatively higher uncrimping pressure when compared to the predetermined rupture pressure. For example, when the crimping portion is made of a hard material, its uncrimping pressure may be higher than that of a crimping portion made of a soft material when they have similar shape, thickness, and/or size. When other factors, such as hardness of material, shape, and thickness, are similar, a larger crimping portion may have a higher uncrimping pressure than a smaller crimping portion. A crimping portion of a more curved shape may have a higher uncrimping pressure than a less curved crimping portion.

### Examples of Predetermined Rupture Pressure

In embodiments, the predetermined rupture pressure may be at or about 0.1 kgf/cm² or more, such as at or about 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 17, 19, 20, 21, 21.1, 21.2, 21.3, 21.4, 21.5, 21.6, 21.7, 21.8, 21.9, 22, 22.1, 22.2, 22.3, 22.4, 22.5, 22.6, 22.7, 22.8, 22.9, 23, 23.1, 23.2, 23.3., 23.4, 23.5, 23.6, 23.7, 23.8, 23.9, 24, 24.1, 24.2, 24.3, 24.4, 24.5, 24.6, 24.7, 24.8, 24.9, 25, 25.1, 25.2, 25.3, 25.4, 25.5, 25.6, 25.7, 25.8, 25.9, 26, 26.1, 26.2, 26.3, 26.4, 26.4, 26.6, 26.7, 26.8, 26.9, 27,27.1, 27.2, 27.3, 27.4, 27.5, 27.6, 27.7, 27.8, 27.9, 28, 28.1, 28.2, 28.3, 28.4, 28.5, 28.6, 28.7, 28.8, 28.9, 29, 29.1, 29.2, 29.3, 29.4, 29.5, 29.6, 29.7, 29.8, 29.9, 30, 30.1, 30.2, 30.3, 30.4, 30.5, 30.6, 30.7, 30.8, 30.9, 31, 32, 34, 35, 36, 37, 38, 39, 40, 41, 42, 43, 44, 45, 46, 47, 48, 49, 50, 51, 52, 53, 54, 55, 56, 57, 58, 59, 60, 61, 62, 53, 64, 65, 66, 67, 68, 69, 70, 71, 72, 73, 74, 75, 76, 77, 78, 79, 80, 81, 82, 83, 84, 85 86, 87, 88, 89, 90, 91, 92, 93, 94, 95, 96, 97, 98, 99, or 100 kgf/cm² or more. In embodiments, the predetermined rupture pressure may be within a range formed by selecting any two numbers listed herein, such as from about 0.2 to about 62 kgf/cm², from about 0.1 to about 10 kgf/cm², from about 0.3 to about 25 kgf/cm², from about 1 to about 21 kgf/cm², from about 2 to about 42 kgf/cm², from about 5 to about 55 kgf/cm², from about 6 to about 46 kgf/cm², from about 7 to about 35 kgf/cm², from about 21 to about 29 kgf/cm², from about 21.5 to about 30.5 kgf/cm², from about 23.5 to about 27.5 kgf/cm², from about 23 to about 33 kgf/cm², from about 24 to about 29 kgf/cm², from about 24.2 to about 28.9 kgf/cm², from about 25.1 to about 29 kgf/cm², from about 25 to about 29 kgf/cm², from about 26 to about 29 kgf/cm², from about 27 to about 29 kgf/cm², from about 25 to about 28 kgf/cm², from about 24.3 to about 27.8 kgf/cm², from about 28 to about 38 kgf/cm², etc.

### Examples of Uncrimping Pressure

In embodiments, the uncrimping pressure may be at or about 10 kgf/cm² or more, such as at or about 10, 11, 12, 13, 14, 15, 16, 17, 18, 19, 20, 21.1, 21.2, 21.3, 21.4, 21.5, 21.6, 21.7, 21.8, 21.9, 22, 22.1, 22.2, 22.3, 22.4, 22.5, 22.6, 22.7, 22.8, 22.9, 23, 23.1, 23.2, 23.3., 23.4, 23.5, 23.6, 23.7, 23.8, 23.9, 24, 24.1, 24.2, 24.3, 24.4, 24.5, 24.6, 24.7, 24.8, 24.9, 25, 25.1, 25.2, 25.3, 25.4, 25.5, 25.6, 25.7, 25.8, 25.9, 26, 26.1, 26.2, 26.3, 26.4, 26.4, 26.6, 26.7, 26.8, 26.9, 27,27.1, 27.2, 27.3, 27.4, 27.5, 27.6, 27.7, 27.8, 27.9, 28, 28.1, 28.2, 28.3, 28.4, 28.5, 28.6, 28.7, 28.8, 28.9, 29, 29.1, 29.2, 29.3, 29.4, 29.5, 29.6, 29.7, 29.8, 29.9, 30, 30.1, 30.2, 30.3, 30.4, 30.5, 30.6, 30.7, 30.8, 30.9, 31, 32, 34, 35, 36, 37, 38, 39, 40, 41, 42, 43, 44, 45, 46, 47, 48, 49, 50, 51, 52, 53, 54, 55, 56, 57, 58, 59, 60, 61, 62, 53, 64, 65, 66, 67, 68, 69, 70, 71, 72, 73, 74, 75, 76, 77, 78, 79, 80, 81, 82, 83, 84, 85 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, 179, 180, 181, 182, 183, 184, 185, 186, 187, 188, 189, 190, 191, 192, 193, 194, 195, 196, 197, 198, 199, or 200 kgf/cm² or more. In embodiments, the uncrimping pressure may be within a range formed by selecting any two numbers listed herein, such as from about 10 to about 20 kgf/cm², from about 20 to about 50 kgf/cm², from about 50 to about 100 kgf/cm², from about 30 to about 60 kgf/cm², from about 40 to about 80 kgf/cm², from about 10 to about 15 kgf/cm², from about 30 to about 40 kgf/cm², from about 40 to about 50 kgf/cm², from about 15 to about 20 kgf/cm², from about 21.1 to about 29.5 kgf/cm², from about 24 to about 33.1 kgf/cm², from about 27.4 to about 38 kgf/cm², from about 29.1 to about 40 kgf/cm², etc. In embodiments, the uncrimping pressure may be more than any number listed herein, such as more than about 29, 29.1, 29.5, 30, 33, 37, 40, 50, 60, 70, 80, 90, or 100 kgf/cm². In embodiments, the uncrimping pressure may be more than any number higher than about 200 kgf/cm², such as 210, 220, 230, 240, 250, 260, 270, 280, 290, 300, 350, 400, 500, or 600 kgf/cm², etc.

### Examples of Predetermined Rupture Pressure and Uncrimping Pressure

The rupture notch is designed such that the predetermined rupture pressure is lower than the uncrimping pressure, so that the crimping portion 22 does not uncrimp when the internal pressure reaches the predetermined rupture pressure and ruptures the rupture notch 41, 201. For example, the predetermined rupture pressure may be from about 21 to about 29 kgf/cm², such as 21.1, 21.2, 21.3, 21.4, 21.5, 21.6, 21.7, 21.8, 21.9, 22, 22.1, 22.2, 22.3, 22.4, 22.5, 22.6, 22.7, 22.8, 22.9, 23, 23.1, 23.2, 23.3., 23.4, 23.5, 23.6, 23.7, 23.8, 23.9, 24, 24.1, 24.2, 24.3, 24.4, 24.5, 24.6, 24.7, 24.8, 24.9, 25, 25.1, 25.2, 25.3, 25.4, 25.5, 25.6, 25.7, 25.8, 25.9, 26, 26.1, 26.2, 26.3, 26.4, 26.4, 26.6, 26.7, 26.8, 26.9, 27,27.1, 27.2, 27.3, 27.4, 27.5, 27.6, 27.7, 27.8, 27.9, 28, 28.1, 28.2, 28.3, 28.4, 28.5, 28.6, 28.7, 28.8, 28.9, or 29 kgf/cm²; and the uncrimping pressure may be higher than about 29 kgf/cm², such as at or about 29.1, 29.2, 29.3, 29.4, 29.5, 29.6, 29.7, 29.8, 29.9, 30, 30.1, 30.2, 30.3, 30.4, 30.5, 30.6, 30.7, 30.8, 30.9, 31, 31.1, 31.2, 31.3, 31.4, 31.5, 31.6, 31.7, 31.8, 31.9, 32, 32.1, 32.2., 32.3, 32.4, 32.5, 32.6, 32.7, 32.8, 32.9, 33, 33.1, 33.2, 33.3, 33.4, 33.5, 33.6, 33.7, 33.8, 33.9, 34, 35, 36, 37, 38, 39, 40, 41, 42, 43, 44, 45, 46, 47, 48, 49, 50 kgf/cm², or any number higher than 50 kgf/cm². In embodiments, the predetermined rupture pressure may be within a range formed by selecting any two numbers provided herein, such as from about 21.1 to about 29, from about 25 to about 29, from about 25.1 to about 29, from about 21 to about 24, from about 25 to about 28.9, from about 24.9 to about 29, from about 25.5 to about 29, from about 26 to about 29, from about 27 to about 29, from about 28 to about 29, from about 25 to about 28.5, from about 24.9 to about 28.9 kgf/cm², etc; and the uncrimping pressure may be within a range formed by selecting any two numbers provided herein, such as from about 29.1 to about 30.4, from about 30.1 to about 34, from about 35 to about 40, from about 40 to about 45 kgf/cm², etc.

### Another Example of Predetermined Rupture Pressure and Uncrimping Pressure

As another example, the uncrimping pressure may be higher than about 40 kgf/cm², such as 41, 42, 43, 44, 45, 46, 47, 48, 49, 50, 51, 52, 53, 54, 55, 56, 57, 58, 59, 60 kgf/cm^{2,} or any number higher than 60 kgf/cm²; and the predetermined rupture pressure may be from about 21 to about 39 kgf/cm², such as 21.1, 21.2, 21.3, 21.4, 21.5, 21.6, 21.7, 21.8, 21.9, 22, 22.1, 22.2, 22.3, 22.4, 22.5, 22.6, 22.7, 22.8, 22.9, 23, 23.1, 23.2, 23.3., 23.4, 23.5, 23.6, 23.7, 23.8, 23.9, 24, 24.1, 24.2, 24.3, 24.4, 24.5, 24.6, 24.7, 24.8, 24.9, 25, 25.1, 25.2, 25.3, 25.4, 25.5, 25.6, 25.7, 25.8, 25.9, 26, 26.1, 26.2, 26.3, 26.4, 26.4, 26.6, 26.7, 26.8, 26.9, 27,27.1, 27.2, 27.3, 27.4, 27.5, 27.6, 27.7, 27.8, 27.9, 28, 28.1, 28.2, 28.3, 28.4, 28.5, 28.6, 28.7, 28.8, 28.9, 29, 29.1, 29.2, 29.3, 29.4, 29.5, 29.6, 29.7, 29.8, 29.9, 30, 30.1, 30.2, 30.3, 30.4, 30.5, 30.6, 30.7, 30.8, 30.9, 31, 31.1, 31.2, 31.3, 31.4, 31.5, 31.6, 31.7, 31.8, 31.9, 32, 32.1, 32.2, 32.3, 32.4, 32.5, 32.6, 32.7, 32.8, 32.9, 33, 33.1, 33.2, 33.3, 33.4, 33.5, 33.6, 33.7, 33.8, 33.9, 34, 34.1, 34.2, 34.3, 34.4, 34.5, 34.6, 34.7, 34.8, 34.9, 35, 35.1, 35.2, 35.3, 35.4, 35.5., 35.6, 35.7, 35.8, 35.9, 36, 37, 38, or 39 kgf/cm². In embodiments, the predetermined rupture pressure may be within a range formed by selecting any two numbers listed herein, such as from about 21.1 to about 29, from about 25 to about 29, from about 25.1 to about 29, from about 21 to about 24, from about 25 to about 28.9, from about 24.9 to about 29, from about 25.5 to about 29, from about 26 to about 29, from about 27 to about 29, from about 28 to about 29, from about 25 to about 28.5, from about 24.9 to about 28.9, from about 21 to about 35, from about 25 to about 39, from about 24.9 to about 35.3, from about 25.1 to about 38, from about 25.5 to about 30.1, from about 29 to about 39, from about 26 to about 38, from about 27 to about 37 kgf/cm² etc.

### Non-limiting Examples of Predetermined Rupture Pressure and Uncrimping Pressure

The examples of predetermined rupture pressure and uncrimping pressure above are illustrating and non-limiting. The predetermined rupture pressure and the uncrimping pressure can be any two numbers provided herein as long as the predetermined rupture pressure is lower than the uncrimping pressure. For example, the predetermined rupture pressure may be 10 kgf/cm² , and the uncrimping pressure may be 100 kgf/cm² ; the predetermined rupture pressure may be 10 kgf/cm² , and the uncrimping pressure may be 100 kgf/cm² ; the predetermined rupture pressure may be 20 kgf/cm² , and the uncrimping pressure may be 50 kgf/cm² ; the predetermined rupture pressure may be 30 kgf/cm² , and the uncrimping pressure may be 40 kgf/cm² ; the predetermined rupture pressure may be 50 kgf/cm² , and the uncrimping pressure may be 100 kgf/cm² ; the predetermined rupture pressure may be 21 kgf/cm² , and the uncrimping pressure may be 30 kgf/cm² ; the predetermined rupture pressure may be 25 kgf/cm² , and the uncrimping pressure may be 30 kgf/cm² ; the predetermined rupture pressure may be kgf/cm² , and the uncrimping pressure may be 60 kgf/cm² ; the predetermined rupture pressure may be 1 kgf/cm² , and the uncrimping pressure may be 10 kgf/cm² ; the predetermined rupture pressure may be 15 kgf/cm² , and the uncrimping pressure may be 20 kgf/cm² ; the predetermined rupture pressure may be 40 kgf/cm² , and the uncrimping pressure may be 90 kgf/cm² , etc.

### Examples of Form Factor, Predetermined Rupture Pressure, and Uncrimping Pressure

The battery provided herein may be a battery having a ratio of form factor (defined as a value obtained by dividing the diameter of the cylindrical battery by its height, i.e., a height(H)-to-diameter(Φ) ratio) of 0.4 or more. For example, the battery provided herein may be, for example, a 46110 cell (diameter 46 mm, height 110 mm, form factor ratio 0.418), a 4875 cell (diameter 48 mm, height 75 mm, form factor ratio 0.640), a 48110 cell (diameter 48 mm, height 110 mm, form factor ratio 0.436), a 4880 cell (diameter 48 mm, height 80 mm, form factor ratio 0.600), a 4680 cell (diameter 46 mm, height 80 mm, form factor ratio 0.575), or a 4695 cell (diameter 46 mm, height 95 mm, form factor ratio 0.484). In the number indicating the form factor, the first two numbers indicate the diameter of the battery, and the next two or three numbers indicate the height of the battery. Batteries with similar ratios of form factor may have similar predetermined rupture pressures. For example, batteries with a ratio of form factor of 0.4 or more, such as the 46110, 4875, 48110, 4880, 4680, or 4695 cell battery, may have a predetermined rupture pressure from about 21 to about 29 kgf/cm², such as 21.1, 21.2, 21.3, 21.4, 21.5, 21.6, 21.7, 21.8, 21.9, 22, 22.1, 22.2, 22.3, 22.4, 22.5, 22.6, 22.7, 22.8, 22.9, 23, 23.1, 23.2, 23.3., 23.4, 23.5, 23.6, 23.7, 23.8, 23.9, 24, 24.1, 24.2, 24.3, 24.4, 24.5, 24.6, 24.7, 24.8, 24.9, 25, 25.1, 25.2, 25.3, 25.4, 25.5, 25.6, 25.7, 25.8, 25.9, 26, 26.1, 26.2, 26.3, 26.4, 26.4, 26.6, 26.7, 26.8, 26.9, 27,27.1, 27.2, 27.3, 27.4, 27.5, 27.6, 27.7, 27.8, 27.9, 28, 28.1, 28.2, 28.3, 28.4, 28.5, 28.6, 28.7, 28.8, 28.9, or 29 kgf/cm²; and may have an uncrimping pressure of higher than about 29 kgf/cm², such as at or about 29.1, 29.2, 29.3, 29.4, 29.5, 29.6, 29.7, 29.8, 29.9, 30, 30.1, 30.2, 30.3, 30.4, 30.5, 30.6, 30.7, 30.8, 30.9, 31, 31.1, 31.2, 31.3, 31.4, 31.5, 31.6, 31.7, 31.8, 31.9, 32, 32.1, 32.2., 32.3, 32.4, 32.5, 32.6, 32.7, 32.8, 32.9, 33, 33.1, 33.2, 33.3, 33.4, 33.5, 33.6, 33.7, 33.8, 33.9, 34, 35, 36, 37, 38, 39, 40, 41, 42, 43, 44, 45, 46, 47, 48, 49, 50 kgf/cm², or any number higher than 50 kgf/cm². In embodiments, the predetermined rupture pressure may be within a range formed by selecting any two numbers provided herein, such as from about 21.1 to about 29, from about 25 to about 29, from about 25.1 to about 29, from about 21 to about 24, from about 25 to about 28.9, from about 24.9 to about 29, from about 25.5 to about 29, from about 26 to about 29, from about 27 to about 29, from about 28 to about 29, from about 25 to about 28.5, from about 24.9 to about 28.9 kgf/cm², etc; and the uncrimping pressure may be within a range formed by selecting any two numbers provided herein, such as from about 29.1 to about 30.4, from about 30.1 to about 34, from about 35 to about 40, from about 40 to about 45 kgf/cm², etc.

### Internal Pressure Rupturing Rupture Notch

When the internal pressure reaches the predetermined rupture pressure, the rupture notch 41, 201 is ruptured to create an opening on the cap plate 40 or the bottom plate. The opening is within the area on the cap plate 40 or the bottom plate that was surrounded by the rupture notch 41, 201 before it is ruptured. Because the predetermined rupture pressure is lower than the uncrimping pressure, when the internal pressure reaches the predetermined rupture pressure, the internal pressure is lower than the uncrimping pressure. As such, when the rupture notch 41, 201 has been ruptured, the cap plate 40 is not uncrimped and is still crimped to the end portion of battery can 20. In embodiments shown in FIG. 1a, the rupture notch 41 is ruptured to create the opening on the cap plate 40 at the first end portion E1. In embodiments shown in FIG. 1B, the rupture notch 201 is ruptured to create the opening on the bottom plate at the first end portion E1.

### Ejection of Jellyroll Electrode Assembly

The predetermined rupture pressure is designed to be sufficient to create an explosive power. When the internal pressure reaches the predetermined rupture pressure, the internal pressure creates an explosive power to eject at least a portion of the jellyroll electrode assembly 10 through the opening on the cap plate 40 or the bottom plate created by the rupturing of the rupture notch. In some embodiments, the explosive power does not damage any other parts of the battery or create any other opening on the cylindrical body of the battery. As such, in embodiments shown in FIG. 1a, the jellyroll electrode assembly is ejected only through the opening on the cap plate 40. In embodiments shown in FIG. 1B, because the predetermined rupture pressure is lower than the uncrimping pressure, when the internal pressure reaches the predetermined rupture pressure and ruptures the rupture notch 201, the cap plate 40 is not uncrimped and still crimped to the end portion E2 of the battery can 20. As such, the jellyroll electrode assembly is ejected only through the opening on the bottom plate. Further, because the area on the cap plate 40 or the bottom plate surrounded by the rupture notch 41, 201 is positioned in the middle of the cap plate 40 or the bottom plate, the opening is also positioned in the middle of the cap plate 40 or the bottom plate. As such, when the jellyroll electrode assembly ejects, the inner portion of the jellyroll, or the portion close to the winding center C ejects first, prior to the outer portion of the jellyroll that surrounds the inner portion inside the cylindrical body before rupture as shown in FIG. 4, with the most inner portion or the center portion of the jellyroll leading the ejection.

### Distance of Ejection

As shown in FIG. 2, the ejected portion of the jellyroll extends telescopically along the winding axis and away from the first end portion E1. The end portion E0 of the ejected portion may reach a distance that is at least about ¼ of the length of the battery cylindrical body along the winding axis. As shown in FIG. 2, the distance between the end portion EO of the ejected electrode assembly farthest from the battery can 20 and the end E1 of the battery, or the difference between t1 and t2, may be at least ¼ of the length t2 of the battery can 20. For example, this distance may be at least at or about 0.25, 0.255, 0.26, 0.265, 0.27, 0.275, 0.28, 0.285, 0.29, 0.295, 0.3, 0.35 0.4, 0.45, 0.5, 0.55, 0.6, 0.65, 0.7, 0.75, 0.8, 0.85, 0.9, 0.95,1.1, 1.125, 1.5, 1.2, 1.225, 1.25, 1.275, 1.3, 1.375, 1.4, 1.45, 1.5, 1.6, 1.7, 1.8, 1.9, 2, 2.1, 2.2, 2.3, 2.4, 2.5, 2.6, 2.7, 2.8, 2.9, 3 times or more of the length t2 of the battery can 20. This distance may be within a range formed by selecting any two numbers listed above, such as within a range of from about 0.25 to about 0.4, from about 0.4 to about 1.3, from about 1 to about 1.8 times of the length t2 of the battery can 20, etc.

### Mass of Ejected Portion

The ejected portion of the jellyroll electrode assembly has a mass that is at least about 25% of the total mass of the jellyroll electrode assembly inside of the battery can prior to the ejection. For example, the ejected portion may have a mass that is at or about 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95%. In embodiment, the ejected portion may have a mass that is within a range formed by selecting any two numbers listed herein, for example, from about 25 to about 30, from about 25 to about 50, from about 25 to about 90, from about 30 to about 60, from about 40 to about 55, from about 45 to about 75, from about 50 to about 70, from about 55 to about 80, from about 60 to about 90% of the total mass of the electrode assembly before being ejected. Surprisingly, the ejected portion of the electrode assembly that has at least about 25% of the total mass as described herein would not cause any further chemical reactions that could lead to thermal runaway inside the cylindrical body of the battery. With at least 25% of the total mass of the electrode assembly ejected to outside of the battery, the electrode assembly remaining inside of the battery may not be enough for the chemical reaction inside of the battery to continue to cause thermal runaway. Moreover, with the ejection of the jellyroll electrode assembly, the gas and heat generated inside of the battery are also released. As such, the chemical reaction inside of the battery may be slowed down or stopped partially or completely, preventing further heat buildup and/or generation of more flammable gas that would cause more breakdown of the electrolyte and/or trigger more reactions insider of the battery.

### Factors Affecting Ejected Portion

Factors affecting the amount of the ejected portion of the jellyroll electrode assembly may include jellyroll outer diameter size, jellyroll winding tension, battery can inner empty space volume, the size of the rupture opening on the rupture notch, easy-to-dissipate collector plate properties, such as number of welding points, collector plate structure, etc.

### No Other Rupture Notch or Vent

The battery provided herein may not include another rupture notch or vent for venting gas. This way, the gas would not be able to escape from another rupture notch or vent, and the internal pressure can increase to be sufficient to create the explosive power to eject at least a portion of the jellyroll electrode assembly that is sufficient to surprisingly prevent and/or stop the thermal runaway.

### Side Rupture Minimized or Prevented

The side portion of the battery can 20 is designed to sustain the predetermined rupture pressure of the rupture notch and may have a predetermined side rupture pressure required to damage the side portion. The side portion may be made of a material and/or have a thickness and/or shape that requires a side rupture pressure that is higher than the predetermined rupture pressure. For example, the side portion may have a thickness in a range of from about 0.1 mm to about 0.4 mm, such as 0.1, 0.11, 0.12, 0.13, 0.14, 0.15, 016, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, or 0.4 mm. In embodiments, the thickness of the side portion may be within a range formed by selecting any two numbers listed herein, such as from about 0.1 mm to about 0.3 mm, from 0.15 mm to about 0.35 mm, from about 0.1 mm to about 0.3 mm, from about 0.12 mm to about 0.34 mm, from about 0.16 mm to about 0.36 mm, from about 0.2 mm to about 0.4 mm, from about 0.25 mm to about 0.32 mm, from about 0.2 mm to about 0.4 mm, etc. When the internal pressure reaches the predetermined rupture pressure, even if the battery explodes and a flame is generated, the explosion does not create any hole or tear on the side portion of the battery cell, or rupture of the side portion is at least minimized, and the flame is guided toward only one end of the battery with the ejection of the jellyroll electrode assembly therethrough, so that the flame is not directly transmitted to any adjacent unit cell in the vicinity, for example, in a battery pack comprising a plurality of batteries as provided herein.

The above-described aspects and drawings and the following examples are presented, but they are provided to describe the present disclosure by way of illustration, and the present disclosure is not limited thereto. It should be understood that a variety of changes and modifications may be made by persons having ordinary skill in the technical field pertaining to the present disclosure within the technical aspects of the present disclosure and the appended claims and their equivalents.

### Examples

### Example 1

A positive electrode plate and a negative electrode plate were stacked with a separator interposed between them in an order of the separator/the positive electrode plate/the separator/the negative electrode plate. The stack was wound together to manufacture a jellyroll-type electrode assembly. The positive electrode plate was obtained by coating a slurry on a current collector. The slurry included a solvent N-Methyl-2-pyrrolidone (NMP) in which a nickel, cobalt, manganese, aluminum (NCMA) active material, a carbon nanotube (CNT) conductive material, and a polyvinylidene fluoride (PDVF) binder were mixed at a weight ratio of 97.6:0.6:1.8. The negative electrode plate was obtained by coating a slurry on a current collector. The slurry included a solvent DI-Water in which an active material including graphite and silicon oxide, a CNT conductive material, and a carboxymethyl cellulose (CMC) binder were mixed at a weight ratio of 98.05:0.05:1.90. The separator was a ceramic coated polyethylene (PE). As shown in FIG. 4, an uncoated portion of each of the positive electrode plate and the negative electrode plate was configured to contact each of two end portions of the electrode assembly. The outer diameter of the manufactured electrode assembly was 44.5 mm, and the height, excluding a tab, was 72 mm (equal to the width of the separator).

A sealing tape having a 34 µm thick polyurethane substrate was attached to the outside of the electrode assembly over the area of 35 mm x 134 mm.

As shown in FIG. 1a, the electrode assembly was inserted into a cylindrical battery can having a crimping portion and a beading portion and an opening portion at the first end portion. An electrolyte solution was injected into the battery can, and the opening portion of the battery can was sealed with a cap plate to manufacture a cylindrical lithium secondary battery. The cap plate included a vent portion configured to rupture at a pressure 15 kgf/cm² or more.

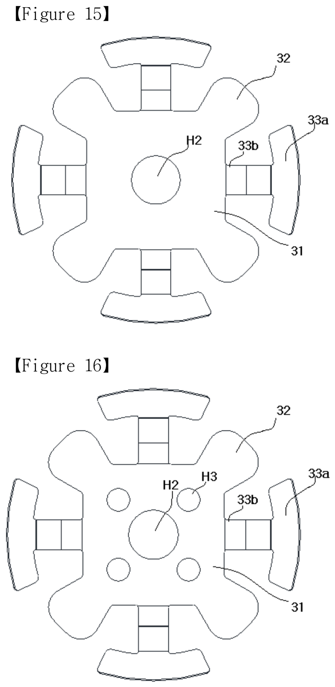

A battery can coupling portion of the first current collector plate was positioned between the cap plate and the electrode assembly. The first current collector plate had a thickness of 0.3 mm and the shape as shown in FIG. 15. A connection portion 33b of 6 mm in width was positioned at the beading portion of the battery can by welding. A flame release area A, as shown in FIG. 11, was 34.8% of the open area of the first end portion of the battery can. In the first current collector plate, a ratio of a minimum width w4 closer to the center of the battery can to a maximum width w3 perpendicular to the diameter of the battery can was 0.9.

The cylindrical battery can was a 4680 cell having the diameter of 46 mm, and the height of 80 mm (the form factor ratio 0.575).

An overcharge test was performed by repeatedly charging the as-prepared lithium secondary battery at 1.7 C from state of charge (SOC) 0% to SOC 100% and discharging. When the vent portion was ruptured, an evaluation was conducted to determine whether the electrode assembly was ejected through the first end portion of the battery can, the ejection distance, and whether or not the side rupture of the battery can occurred. The following TABLE 3 summarizes the results.

### Example 2

Example 2 was carried out in the same way as Example 1 except that the sealing tape attached to the outside of the electrode assembly had a 30 µm thick polypropylene substrate and an area of 63 mm x 134 mm.

### Example 3

Example 3 was carried out in the same way as Example 1 except that a first current collector plate having the hole H3 as shown in FIG. 16 was used as the first current collector plate located between the cap plate and the electrode assembly. The flame release area A was 36.1%, and the connection portion 33b was 6 mm in width.

### Example 4

Example 4 was carried out in the same way as Example 1 except that a first current collector plate having the hole H3 as shown in FIG. 16 was used as the first current collector plate located between the cap plate and the electrode assembly. The flame release area A was 47.2%, and the connection portion 33b was 4 mm in width.

### Example 5

Example 5 was carried out in the same way as Example 1 except that a first current collector plate having the hole H3 as shown in FIG. 9 was used as the first current collector plate located between the cap plate and the electrode assembly. The flame release area was 44.3%, and the connection portion 33b was 4 mm in width. The battery can coupling portion 33a had a tapered structure such that the minimum width was equal to the width of the connection portion 33b. The ratio of the minimum width w4 (4 mm) to the maximum width w3 (14.65 mm) of the tapered structure was 0.27.

### Example 6

Example 6 was carried out in the same way as Example 1 except that a first current collector plate having the hole H3 and the slit S1 as shown in FIG. 10 was used as the first current collector plate located between the cap plate and the electrode assembly. The flame release area A was 44.9%. The connection portion 33b was 4 mm in width. The battery can coupling portion 33a had a tapered structure such that the minimum width was equal to the connection portion 33b. The ratio of the minimum width w4 (4 mm) to the maximum width w3 (14.65 mm) of the tapered structure was 0.27.

### Example 7

Example 7 was carried out in the same way as Example 1 except that the first current collector plate had a thickness of 0.2 mm, and the flame release area A was 34.8%.

### Example 8

Example 8 was carried out in the same way as Example 1 except that the outer diameter of the manufactured electrode assembly was 44.2 mm.

### Example 9

Example 9 was carried out in the same way as Example 1 except that the outer diameter of the manufactured electrode assembly was 44.7 mm.

### Example 10

Example 10 was carried out in the same way as Example 2 except that the cap plate included a vent portion configured to rupture at a pressure of 27 kgf/cm² or more.

### Example 11

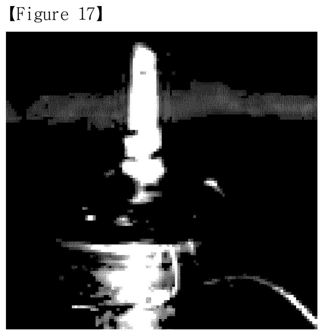

Example 11 was carried out in the same way as Example 2 except that the cap plate included a vent portion configured to rupture at a pressure of 24 kgf/cm² or more. FIG. 17 is a photographic image showing the electrode ejected from the central portion of the electrode assembly.

### Example 12

Example 12 was carried out in the same way as Example 2 except that the cap plate included a vent portion configured to rupture at a pressure of 21 kgf/cm² or more.

### Example 13

Example 13 was carried out in the same way as Example 2 except that the cap plate included a vent portion configured to rupture at a pressure of 20 kgf/cm² or more.

The following TABLE 1 summarizes the vent pressure, the sealing tape condition, and the electrode assembly outer diameter, and the following TABLE 2 summarizes the current collector plate structure of the batteries manufactured in Examples 1 to 13.

**TABLE 1**

| Ex. No. | Vent (rupture) pressure (kgf/cm²) | Sealing tape | | | Electrode Assembly |
|---|---|---|---|---|---|
| | | Material | Area (mmxmm) | Thickness (µm) | Outer Diameter (mm) |
| 1 | 15 | PU | 35x134 | 34 | 44.5 |
| 2 | 15 | PP | 63x134 | 30 | 44.5 |
| 3 | 15 | PU | 35x134 | 34 | 44.5 |
| 4 | 15 | PU | 35x134 | 34 | 44.5 |
| 5 | 15 | PU | 35x134 | 34 | 44.5 |
| 6 | 15 | PU | 35x134 | 34 | 44.5 |
| 7 | 15 | PU | 35x134 | 34 | 44.5 |
| 8 | 15 | PU | 35x134 | 34 | 44.2 |
| 9 | 15 | PU | 35x134 | 34 | 44.7 |
| 10 | 27 | PP | 63x134 | 30 | 44.5 |
| 11 | 24 | PP | 63x134 | 30 | 44.5 |
| 12 | 21 | PP | 63x134 | 30 | 44.5 |
| 13 | 20 | PP | 63x134 | 30 | 44.5 |

**TABLE 2**

| Ex. No. | Current collector | | | | | |
|---|---|---|---|---|---|---|
| | Thickness (mm) | Flame release area (A) (%) | Connection portion width (mm) | Hole | Tapered structure | Slit |
| 1 | 0.3T | 34.8 | 6 | X | X | X |
| 2 | 0.3T | 34.8 | 6 | X | X | X |
| 3 | 0.3T | 36.1 | 6 | 0 | X | X |
| 4 | 0.3T | 47.2 | 4 | 0 | X | X |
| 5 | 0.3T | 44.3 | 4 | 0 | 0 | X |
| 6 | 0.3T | 44.9 | 4 | 0 | 0 | 0 |
| 7 | 0.2T | 34.8 | 6 | X | X | X |
| 8 | 0.3T | 34.8 | 6 | X | X | X |
| 9 | 0.3T | 34.8 | 6 | X | X | X |
| 10 | 0.3T | 34.8 | 6 | X | x | X |
| 11 | 0.3T | 34.8 | 6 | X | X | X |
| 12 | 0.3T | 34.8 | 6 | X | X | X |
| 13 | 0.3T | 34.8 | 6 | X | X | X |

In TABLEs 1 and 2, "X" means non-existence; and "0" means existence.

The following TABLE 3 summarizes the ejection distance ratio when the electrode was ejected in the overcharge test of repeatedly charging and discharging the batteries of Examples 1 to 13 at the rate of 1.7 C. The ejection distance ratio is the ratio of distance between the ejected electrode assembly end portion and the second end portion of the battery can to the distance between the first and second end portions of the battery can. The ejection distance is an average value of repeated experiments. When the electrode was not ejected, the side rupture of the battery can occurred, and the side rupture of the battery can was marked as Fail.

**TABLE 3**

| Ex. No. | Ejection of electrode | Ejection distance ratio | Side rupture result of battery can | Spiral structure formation of ejected part | Central portion bulge of electrode assembly when ejected |
|---|---|---|---|---|---|
| 1 | X | - | 10/10ea Fail | - | - |
| 2 | X | - | 4/10ea Fail | - | - |
| 3 | X | - | 1/3ea Fail | - | - |
| 4 | X | - | 1/3ea Fail | - | - |
| 5 | NA | - | 0/6ea Fail | - | - |
| 6 | X | - | 1/6ea Fail | - | - |
| 7 | NA | - | 0/3ea Fail | - | - |
| 8 | X | - | 5/10ea Fail | - | - |
| 9 | X | - | 9/10ea Fail | - | - |
| 10 | 0 | 2 (160 mm / 80 mm) | 0/5ea Fail | 5/5ea | 5/5ea |
| 11 | 0 | 1.75 (140 mm / 80 mm) | 0/5ea Fail | 5/5ea | 5/5ea |
| 12 | 0 | 1.275 (102 mm / 80mm) | 1/5ea Fail | 0/5ea | 3/5ea |
| 13 | 0 | 1.125 (90 mm / 80 mm) | 2/2ea Fail | 0/2ea | 0/5ea |

In TABLE 3, "X" means non-existence; and "0" means existence.

As can be seen from the above-described experimental results, in Examples 10 to 12, the vent pressure of the battery was 21 kgf/cm² or more, and the ejection distance ratio was 1.25 times or more. Compared to the other examples, the degree of side rupture of the battery can was extremely low. In particular, in Example 10 and Example 11, when the electrode assembly was ejected, the central portion of the electrode assembly bulged, the electrode assembly was ejected in a spiral structure, and the side rupture of the battery can did not occur in each of the five repeated experiments.

Example 2 confirmed that the degree of side rupture of the battery can was improved by using a polypropylene material sealing tape, compared to Example 1. Examples 3 and 4 improved the degree of side rupture of the battery can by designing the flame release area (A) to be relatively large. Examples 5 and 6 improved the degree of side rupture of the battery can by using the first current collector plate having a tapered structure. Example 8 improved the degree of side rupture of the battery can by designing the outer diameter of the electrode assembly to be relatively small. Example 7 improved the degree of side rupture of the battery can by making the thickness of the first current collector plate thin.

### List of Reference Numerals

1: Lithium secondary battery
2: Pack housing
3: Battery pack
5: Vehicle
10: Electrode assembly
11: Negative electrode plate uncoated portion
11a: Segment
12: Positive electrode plate uncoated portion
H1: Winding center hole
20: Battery can
E1: Battery can first end portion
E2: Battery can second end portion
E0: Electrode assembly end portion
21: Beading portion
22: Crimping portion
30: First current collector plate
H2: Current collector plate hole
31: Support portion
32: Tab coupling portion
33: Battery can coupling portion
33a: Coupling portion
33b: Connection portion
H3: Support portion hole
S1: Support portion slit
40: Cap plate
41, 201: Vent portion
G1: Sealing gasket
50: Battery terminal
G2: Insulation gasket
T1: First electrode terminal
T2: Second electrode terminal
P: Second current collector plate
S: Insulator
42a: Protruding portion
42c: Connection plate
45: Lead
80: Sealing tape
H3: Support portion hole
211: Negative electrode plate
210: Positive electrode plate
212: Separator
220: Current collector
221: Active material layer
222: Uncoated portion

## Claims

1. A lithium secondary battery comprising:
a battery can,
an electrode assembly,
an electrolyte received in the battery can, and
a cap plate configured to seal the battery can,
wherein the battery can comprises a first end portion and a second end portion opposite the first end portion,
wherein the lithium secondary battery is configured such that at least a portion of the electrode assembly is ejected through the first end portion of the battery can when an internal pressure within the battery can is 21 kgf/cm² or more, and
wherein after the portion of the electrode assembly is ejected through the first end portion of the battery can, a distance from an end portion of the electrode assembly located farthest away from the battery can to the second end portion of the battery can is greater than or equal to 1.25 times a distance between the first end portion and the second end portion of the battery can.

2. The lithium secondary battery according to claim 1, wherein the lithium secondary battery is configured such that the portion of the electrode assembly is ejected through the first end of the battery can:
a) without or before thermal runaway of the lithium secondary battery; or
b) without or before side rupture of the battery can.

3. The lithium secondary battery according to claim 1, wherein the first end portion of the battery can includes a vent portion, or
wherein the cap plate is secured to the first end portion of the battery can, and the cap plate includes a vent portion.

4. The lithium secondary battery according to claim 4, wherein the lithium secondary battery is configured such that the portion of the electrode assembly is ejected through the first end portion of the battery can after destruction of a structure securing the cap plate to the first end portion of the battery can or after rupture of the vent portion.

5. The lithium secondary battery according to claim 1, wherein the cap plate includes a vent portion, and
wherein the vent portion is configured to rupture when the internal pressure is 21 kgf/cm² or more.

6. The lithium secondary battery according to claim 5, wherein the vent portion is configured to rupture when the internal pressure is more than 25 kgf/cm² and less than 29 kgf/cm².

7. The lithium secondary battery according to claim 1, wherein the lithium secondary battery comprises a first current collector plate between the first end portion of the battery can and the electrode assembly.

8. The lithium secondary battery according to claim 7, wherein the first current collector plate comprises a battery can coupling portion having a tapered structure.

9. The lithium secondary battery according to claim 7, wherein a flame release area ranges from 30% to 50% based on a total open area of the first end portion of the battery can.

10. The lithium secondary battery according to claim 1, wherein a diameter-to-height ratio of the lithium secondary battery is 0.4 or more.

11. The lithium secondary battery according to claim 1, wherein the lithium secondary battery is a 46110 cell, a 4875 cell, a 48110 cell, a 4880 cell, a 4680 cell, or a 4695 cell.

12. The lithium secondary battery according to claim 1, wherein the electrode assembly is cylindrical in shape.

13. The lithium secondary battery according to claim 1, wherein a thickness of a side of the battery can ranges from 0.1 mm to 0.4 mm.

14. The lithium secondary battery according to claim 1, wherein the electrode assembly is a jellyroll-type electrode assembly including a positive electrode plate and a negative electrode plate wound with a separator interposed between the positive electrode plate and the negative electrode plate, and wherein after the portion of the electrode assembly is ejected through the first end portion of the battery can, the electrode assembly has a spiral structure.

15. The lithium secondary battery according to claim 14, wherein a sealing tape including polypropylene or polyimide is attached to an outermost end portion of the electrode assembly.

16. The lithium secondary battery according to claim 14, wherein the positive electrode plate and the negative electrode plate each includes an uncoated portion where an active material layer is not formed, and
wherein at least part of the uncoated portion of the positive electrode plate or the negative electrode plate defines an electrode tab.

17. The lithium secondary battery according to claim 16, wherein the positive electrode plate uncoated portion and the negative electrode plate uncoated portion are respectively formed at an end portion of the positive electrode plate and the negative electrode plate along a direction in which the electrode assembly is wound,
wherein a first current collector plate is coupled to the positive electrode plate uncoated portion and a second current collector plate is coupled to the negative electrode plate uncoated portion, and
wherein the first current collector plate and the second current collector plate are each connected to an electrode terminal.

18. The lithium secondary battery according to claim 17, wherein each of the positive electrode plate uncoated portion and the negative electrode plate uncoated portion is shaped into a plurality of independently bendable segments, and
wherein at least part of the plurality of independently bendable segments are bent toward a winding center of the electrode assembly.

19. The lithium secondary battery according to claim 18, wherein the at least part of the plurality of independently bendable segments are overlapped on a top of the electrode assembly or a bottom of the electrode assembly, and
wherein the first current collector plate and the second current collector plate are each coupled to the plurality of overlapped segments.

20. A battery pack comprising the lithium secondary battery according to claim 1.

21. An electric vehicle comprising the battery pack according to claim 20 as a power source.
